(19) Europäisches Patentamt
European Patent Office
Office européen des brevets

(11) **EP 4 750 136 A1**

(12) **EUROPEAN PATENT APPLICATION**
published in accordance with Art. 153(4) EPC

(43) Date of publication:
**27.05.2026 Bulletin 2026/22**

(21) Application number: **24851111.5**

(22) Date of filing: **09.08.2024**

(51) International Patent Classification (IPC):
*H04W 24/10* (2009.01)

(52) Cooperative Patent Classification (CPC):
**H04W 24/10; H04W 64/00**

(86) International application number:
**PCT/CN2024/110875**

(87) International publication number:
**WO 2025/031466 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 CN 202311014244**

(71) Applicant: HUAWEI TECHNOLOGIES CO., LTD.
**Shenzhen, Guangdong 518129 (CN)**

(72) Inventors:
• TIAN, Yang
  **Shenzhen, Guangdong 518129 (CN)**
• SUN, Yan
  **Shenzhen, Guangdong 518129 (CN)**
• LI, Yuan
  **Shenzhen, Guangdong 518129 (CN)**
• JIN, Huangping
  **Shenzhen, Guangdong 518129 (CN)**

(74) Representative: Isarpatent
**Patent- und Rechtsanwälte Part G mbB
Friedrichstrasse 31
80801 München (DE)**

(54) **COMMUNICATION METHOD AND COMMUNICATION APPARATUS**

(57)     This application provides an information transmission method and apparatus, used in scenarios where AI is combined with wireless networks, and especially in scenarios where AI models used for positioning is combined with wireless networks. The method includes: receiving indication information from a location management function network element, where the indication information indicates an artificial intelligence AI positioning function or an AI positioning model, the AI positioning function or the AI positioning model belongs to a plurality of AI positioning functions or AI positioning models, the plurality of AI positioning functions or AI positioning models correspond to a plurality of different measurement quantity sets, and the measurement quantity set includes one or more measurement quantities; and sending a channel measurement result to the location management function network element based on the indication information, where a measurement quantity corresponding to the channel measurement result corresponds to the AI positioning function or the AI positioning model indicated by the indication information. Solutions of this application are based on correspondences between input/output measurement quantities for AI positioning cases and different AI positioning functions or AI positioning models, and can reduce signaling overheads.

FIG. 9

## Description

This application claims priority to Chinese Patent Application No. 202311014244.0, filed with the China National Intellectual Property Administration on August 10, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

In artificial intelligence (artificial intelligence, AI)-based positioning technologies, an AI positioning model may be deployed in different devices or nodes. For example, the AI positioning model is usually deployed on a positioning device side, for example, a location management function network element (location management function, LMF), or deployed on a base station (gNodeB, gNB) side. The AI positioning model uses a channel measurement result reported by a channel measurement network element as input, and outputs a location of a terminal device. Therefore, the channel measurement network element usually needs to report a channel measurement report to the location management function network element.

Protocols support, in uplink positioning, that the LMF sends an NR positioning protocol A (NR positioning protocol A, NRPPa) measurement request to the base station (gNodeB, gNB), and the gNB measures a sounding reference signal (sounding reference signal, SRS) sent by the UE, to obtain a reference signal received path power (reference signal received path power, RSRPP) result, and sends the RSRPP result to the LMF. It is found in research that signaling overheads are high, and therefore how to reduce signaling overheads is a problem to be urgently resolved.

## SUMMARY

This application provides a communication method and a communication apparatus, which may be used in AI positioning scenarios to reduce signaling overheads.

According to a first aspect, a communication method is provided. The method may be performed by a first device, or may be performed by a chip or a circuit of the first device. This is not limited in this application. For ease of description, the following uses an example in which the method is performed by the first device for description.

The method includes: receiving indication information from a location management function network element, where the indication information indicates an AI positioning function, the AI positioning function belongs to a plurality of AI positioning functions, the plurality of AI positioning functions correspond to a plurality of different measurement quantity sets, and the measurement quantity set includes one or more measurement quantities; and sending a channel measurement result to the location management function network element based on the indication information, where a measurement quantity corresponding to the channel measurement result corresponds to the AI positioning function indicated by the indication information.

Optionally, the first device determines the AI positioning function based on the indication information, and then determine the measurement quantity corresponding to the AI positioning function.

For example, the location management function network element may be a positioning node or a positioning device configured to manage a location of a terminal device, for example, an LMF.

It should be understood that the plurality of AI positioning functions are in one-to-one correspondence with the plurality of different measurement quantity sets, each measurement quantity set includes one or more measurement quantities, and the measurement quantity may be one of the following: a line of sight identification result; a time of arrival estimation result; an angle of arrival estimation result; a line of sight identification result corresponding to each path in a first path set; a delay corresponding to each path in a second path set; an amplitude corresponding to each path in a third path set; or a phase corresponding to each path in a fourth path set. At least two of the first path set, the second path set, the third path set, and the fourth path set may be the same or different. For specific explanations, refer to the following related descriptions.

According to the solution provided in this application, the first device may determine, based on the AI positioning function indicated by the indication information, the channel measurement result sent to the location management function network element. For example, an AI positioning model may be an AI positioning model used for positioning. It is assumed that input of the AI positioning model is the channel measurement result. Because there is a correspondence between the measurement quantity corresponding to the channel measurement result and the AI positioning function indicated by the indication information, the first device may determine, based on the indication information and the correspondence, the channel measurement result reported to the location management function network element. That is, based on the received indication information, the first device may implicitly learn of the channel measurement result expected by the location management function network element, or in other words, learn of a corresponding channel measurement report requirement. Correspondingly, by parsing the received channel measurement result, the location management function network element may implicitly learn of the AI positioning function that is correspondingly associated with the channel measurement result, and then perform AI positioning.

With reference to the first aspect, in some implementations of the first aspect, the indication information is carried in a measurement request message from the location management function network element.

Optionally, the measurement request message and the indication information that are sent by the location management function network element may be sent together or independently. In other words, the indication information may not be carried in the measurement request message. In this case, the measurement request message and the indication information may be sent simultaneously or separately. This is not limited in this application.

Based on the foregoing solution, when the indication information is determined, the location management function network element includes the indication information into the measurement request message and sends the measurement request message to the first device, so that the first device determines the AI positioning function based on the indication information, and then reports the channel measurement result corresponding to the measurement quantity corresponding to the AI positioning function to the location management function network element based on the correspondence between the measurement quantity corresponding to the channel measurement result and the AI positioning function indicated by the indication information. This implementation helps reduce signaling overheads.

With reference to the first aspect, in some implementations of the first aspect, the AI positioning function corresponds to one or more of the following measurement quantities:

a line of sight (line of sight, LOS) identification result;
a time of arrival (time of arrival, TOA) estimation result;
an angle of arrival (angle of arrival, AOA) estimation result;
an LOS identification result corresponding to each path in a first path set;
a delay corresponding to each path in a second path set;
an amplitude corresponding to each path in a third path set; or
a phase corresponding to each path in a fourth path set.

At least two of the first path set, the second path set, the third path set, and the fourth path set are the same or different.

For example, the LOS identification result includes a line of sight LOS and a non-line of sight (non-line of sight, NLOS), and/or an LOS probability. The LOS probability is used to determine an NLOS degree of a channel environment. At different NLOS degrees (that is, different channel conditions), the channel measurement result affects inference precision of the AI positioning model to different degrees. Therefore, the first device may learn of the NLOS degree of the channel based on the channel measurement result, and then learn of a current channel condition.

It should be understood that the line of sight identification result, the time of arrival estimation result, and the angle of arrival estimation result may be considered as measurement quantities of channel measurement, and one channel may include one or more paths (for example, a path set). For example, the line of sight identification result may be an average LOS probability of line of sight identification results corresponding to all paths in a channel, or an LOS or NLOS identification result with the highest occurrence frequency. The time of arrival estimation result may be an average value of time of arrival estimation results corresponding to all paths in a channel. The angle of arrival estimation result may be an average value of angle of arrival estimation results corresponding to all paths in a channel.

Based on the foregoing solution, the first device may determine, based on the received indication information, the measurement quantity corresponding to the channel measurement result corresponding to the AI positioning function, then obtain the channel measurement result based on channel measurement, and report the channel measurement result corresponding to the AI positioning function indicated by the indication information. This implementation helps reduce signaling overheads.

With reference to the first aspect, in some implementations of the first aspect, the first device is an access network device, the channel measurement result is obtained based on first channel measurement, and the first channel measurement includes measuring a sounding reference signal from a terminal device; or the first device is a terminal device, the channel measurement result is obtained based on second channel measurement, and the second channel measurement includes measuring a positioning reference signal or a channel state information reference signal from an access network device; or the first device is a first terminal device, the channel measurement result is obtained based on third channel measurement, and the third channel measurement includes measuring a sidelink positioning reference signal from a second terminal device.

Based on the foregoing solution, channel measurement manners in an uplink AI positioning scenario, a downlink AI positioning scenario, and a sidelink AI positioning scenario are provided. The correspondence between the measurement quantity corresponding to the channel measurement result and the AI positioning function indicated by the indication information is defined, so that signaling overheads can be reduced.

With reference to the first aspect, in some implementations of the first aspect, the AI positioning function further corresponds to one of the following reporting methods: a measurement result of each path in a same measurement quantity is reported independently; or the measurement result of each path in the same measurement quantity is reported differentially.

Based on the foregoing solution, the first device may determine the AI positioning function based on the received indication information and determine a corresponding reporting method of the channel measurement result based on the AI positioning function, then obtain the channel measurement result based on channel measurement, and report the channel measurement result associated with the AI positioning function to the location management function network element in the corresponding reporting method. Compared with a current solution in which a plurality of pieces of signaling are used to indicate a reporting method and an AI positioning function separately or a plurality of fields in one piece of signaling are used to indicate a reporting method and an AI positioning function, the technical solution of this application is based on a correspondence between an AI positioning function or an AI positioning model and a measurement quantity, and is further based on a correspondence between the AI positioning function or the AI positioning model and a reporting method, so that both the measurement quantity and the reporting method that correspond to the AI positioning function or the AI positioning model can be indicated by sending indication information, thereby reducing signaling overheads.

With reference to the first aspect, in some implementations of the first aspect, the channel measurement result is included in a measurement report, and that the measurement result of each path in the same measurement quantity is reported differentially includes: the measurement result of each path in the same measurement quantity in a same measurement report is reported differentially.

That is, measurement results of a same measurement quantity in different measurement reports are reported independently.

Based on the foregoing solution, for reporting of a same measurement quantity in a same measurement report, it is considered to differentially report a measurement result of each path, so that signaling overheads can be reduced. For example, a first path and a second path are included. A differential delay measurement result of the plurality of paths may include a delay measurement result corresponding to the first path and a first differential value, and the first differential value indicates a difference between a delay measurement result corresponding to the second path and the delay measurement result corresponding to the first path. Compared with directly reporting the delay measurement results corresponding to the first path and the second path, the differential reporting method can reduce signaling overheads.

With reference to the first aspect, in some implementations of the first aspect, the AI positioning function includes one or more AI positioning models, and the measurement quantity corresponding to the channel measurement result corresponds to one or more AI positioning models.

Based on the foregoing solution, the AI positioning function may further include at least one AI positioning model. In this case, each AI positioning model may correspond to one measurement quantity and/or reporting method corresponding to the channel measurement result. Therefore, after receiving the indication information, the first device may determine the AI positioning function, and may implicitly determine the one or more AI positioning models corresponding to the AI positioning function, and the measurement quantity and/or the reporting method of the channel measurement result that are/is corresponding to each AI positioning model, and then send a corresponding measurement result to the location management function network element based on the indication information. Compared with a current solution in which a reporting method and an AI positioning function are separately indicated, this solution can reduce signaling overheads.

According to a second aspect, a communication method is provided. The method may be performed by a location management function network element, or may be performed by a chip or a circuit of the location management function network element. This is not limited in this application. For ease of description, the following uses an example in which the method is performed by the location management function network element for description.

The method includes: sending indication information to a first device, where the indication information indicates an AI positioning function, the AI positioning function belongs to a plurality of AI positioning functions, the plurality of AI positioning functions correspond to a plurality of different measurement quantity sets, and the measurement quantity set includes one or more measurement quantities; and receiving a channel measurement result from the first device, where a measurement quantity corresponding to the channel measurement result corresponds to the AI positioning function indicated by the indication information.

Optionally, the method further includes: The location management function network element determines the indication information before sending the indication information to the first device, and performs AI positioning on a UE after receiving the channel measurement result.

According to the solution provided in this application, the location management function network element may implicitly indicate the measurement quantity, corresponding to the AI positioning function, of the channel measurement result by sending the indication information to the first device. For example, an AI model may be an AI model used for positioning. It is assumed that input of the AI positioning model is the channel measurement result. Because there is a correspondence between the measurement quantity corresponding to the channel measurement result and the AI positioning function indicated by the indication information, the first device may determine, based on the indication information and the correspondence, the channel measurement result reported to the location management function network element. That is, based on the received indication information, the first device may implicitly learn of the channel measurement result expected by the location management function network element, or in other words, learn of a corresponding channel measurement report requirement. Correspondingly, by parsing the received channel measurement result, the location management function network element may implicitly learn of the AI positioning function that is correspondingly associated with the channel measurement result, and then perform AI positioning.

With reference to the second aspect, in some implementations of the second aspect, the indication information is carried in a measurement request message sent by the location management function network element.

With reference to the second aspect, in some implementations of the second aspect, the AI positioning function corresponds to any one of the following measurement quantities: a line of sight LOS identification result; a time of arrival TOA estimation result; an angle of arrival AOA estimation result; an LOS identification result corresponding to each path in a first path set; a delay corresponding to each path in a second path set; an amplitude corresponding to each path in a third path set; or a phase corresponding to each path in a fourth path set. At least two of the first path set, the second path set, the third path set, and the fourth path set are the same or different.

With reference to the second aspect, in some implementations of the second aspect, the first device is an access network device, the channel measurement result is obtained based on first channel measurement, and the first channel measurement includes measuring a sounding reference signal from a terminal device; or the first device is a terminal device, the channel measurement result is obtained based on second channel measurement, and the second channel measurement includes measuring a positioning reference signal or a channel state information reference signal from an access network device; or the first device is a first terminal device, the channel measurement result is obtained based on third channel measurement, and the third channel measurement includes measuring a sidelink positioning reference signal from a second terminal device.

With reference to the second aspect, in some implementations of the second aspect, the AI positioning function further corresponds to one of the following reporting methods: a measurement result of each path in a same measurement quantity is reported independently; or the measurement result of each path in the same measurement quantity is reported differentially.

With reference to the second aspect, in some implementations of the second aspect, the channel measurement result is included in a measurement report, and that the measurement result of each path in the same measurement quantity is reported differentially includes: the measurement result of each path in the same measurement quantity in a same measurement report is reported differentially.

That is, measurement results of a same measurement quantity in different measurement reports are reported independently.

With reference to the second aspect, in some implementations of the second aspect, the AI positioning function includes one or more AI positioning models, and the measurement quantity corresponding to the channel measurement result corresponds to one or more AI positioning models.

For beneficial effects of the second aspect and some implementations of the second aspect, correspondingly refer to related descriptions in the first aspect. Details are not described herein again.

According to a third aspect, a communication method is provided. The method may be performed by a first device, or may be performed by a chip or a circuit of the first device. This is not limited in this application. For ease of description, the following uses an example in which the method is performed by the first device for description.

The method includes: receiving indication information from a location management function network element, where the indication information indicates an AI positioning model, the AI positioning model belongs to a plurality of AI positioning models, the plurality of AI positioning models correspond to a plurality of different measurement quantity sets, and the measurement quantity set includes one or more measurement quantities; and sending a channel measurement result to the location management function network element based on the indication information, where a measurement quantity corresponding to the channel measurement result corresponds to the AI positioning model indicated by the indication information.

Optionally, the first device determines the AI positioning model based on the indication information, and then determine the measurement quantity corresponding to the AI positioning model.

It should be understood that the plurality of AI positioning models are in one-to-one correspondence with the plurality of different measurement quantity sets, each measurement quantity set includes one or more measurement quantities, and the measurement quantity may be one of the following: a line of sight identification result; a time of arrival estimation result; an angle of arrival estimation result; a line of sight identification result corresponding to each path in a first path set; a delay corresponding to each path in a second path set; an amplitude corresponding to each path in a third path set; or a phase corresponding to each path in a fourth path set. At least two of the first path set, the second path set, the third path set, and the fourth path set may be the same or different. For specific explanations, refer to the foregoing related descriptions.

According to the solution provided in this application, the first device may determine, based on the AI positioning model indicated by the indication information, the channel measurement result sent to the location management function network element. For example, the AI model may be an AI model used for positioning. It is assumed that input of the AI positioning model is the channel measurement result. Because there is a correspondence between the measurement quantity corresponding to the channel measurement result and the AI positioning model indicated by the indication information, the first device may determine, based on the indication information and the correspondence, the channel measurement result reported to the location management function network element. That is, based on the received indication information, the first device may implicitly learn of the channel measurement result expected by the location management function network element, or in other words, learn of a corresponding channel measurement report requirement. Correspondingly, by parsing the received channel measurement result, the location management function network element may implicitly learn of the AI positioning model that is correspondingly associated with the channel measurement result, and then perform AI positioning.

With reference to the third aspect, in some implementations of the third aspect, the indication information is carried in a measurement request message from the location management function network element.

With reference to the third aspect, in some implementations of the third aspect, the AI positioning model corresponds to one or more of the following measurement quantities:

a line of sight LOS identification result;
a time of arrival TOA estimation result;
an angle of arrival AOA estimation result;
an LOS identification result corresponding to each path in a first path set;
a delay corresponding to each path in a second path set;
an amplitude corresponding to each path in a third path set; or
a phase corresponding to each path in a fourth path set.

At least two of the first path set, the second path set, the third path set, and the fourth path set are the same or different. For related explanations of the measurement quantities, refer to the foregoing related descriptions.

With reference to the third aspect, in some implementations of the third aspect, the first device is an access network device, the channel measurement result is obtained based on first channel measurement, and the first channel measurement includes measuring a sounding reference signal from a terminal device; or the first device is a terminal device, the channel measurement result is obtained based on second channel measurement, and the second channel measurement includes measuring a positioning reference signal or a channel state information reference signal from an access network device; or the first device is a first terminal device, the channel measurement result is obtained based on third channel measurement, and the third channel measurement includes measuring a sidelink positioning reference signal from a second terminal device.

With reference to the third aspect, in some implementations of the third aspect, the AI positioning model further corresponds to one of the following reporting methods: a measurement result of each path in a same measurement quantity is reported independently; or the measurement result of each path in the same measurement quantity is reported differentially.

With reference to the third aspect, in some implementations of the third aspect, the channel measurement result is included in a measurement report, and that the measurement result of each path in the same measurement quantity is reported differentially includes: the measurement result of each path in the same measurement quantity in a same measurement report is reported differentially.

That is, the measurement result of each path in the same measurement quantity in different measurement reports is reported independently.

For beneficial effects of the third aspect and some implementations of the third aspect, correspondingly refer to related descriptions in the first aspect. Details are not described herein again.

According to a fourth aspect, a communication method is provided. The method may be performed by a location management function network element, or may be performed by a chip or a circuit of the location management function network element. This is not limited in this application. For ease of description, the following uses an example in which the method is performed by the location management function network element for description.

The method includes: sending indication information to a first device, where the indication information indicates an AI positioning model, the AI positioning model belongs to a plurality of AI positioning models, the plurality of AI positioning models correspond to a plurality of different measurement quantity sets, and the measurement quantity set includes one or more measurement quantities; and receiving a channel measurement result from the first device, where a measurement quantity corresponding to the channel measurement result corresponds to the AI positioning model indicated by the indication information.

Optionally, the method further includes: The location management function network element determines the indication information before sending the indication information to the first device, and performs AI positioning on a UE after receiving the channel measurement result.

According to the solution provided in this application, the location management function network element may implicitly indicate the measurement quantity, corresponding to the AI positioning model, of the channel measurement result by sending the indication information to the first device. For example, the AI model may be an AI model used for positioning. It is assumed that input of the AI positioning model is the channel measurement result. Because there is a correspondence between the measurement quantity corresponding to the channel measurement result and the AI positioning model indicated by the indication information, the first device may determine, based on the indication information and the correspondence, the channel measurement result reported to the location management function network element. That is, based on the received indication information, the first device may implicitly learn of the channel measurement result expected by the location management function network element, or in other words, learn of a corresponding channel measurement report requirement. Correspondingly, by parsing the received channel measurement result, the location management function network element may implicitly learn of the AI positioning model that is correspondingly associated with the channel measurement result, and then perform AI positioning.

With reference to the fourth aspect, in some implementations of the fourth aspect, the indication information is carried in a measurement request message sent by the location management function network element.

With reference to the fourth aspect, in some implementations of the fourth aspect, the AI positioning model corresponds to any one of the following measurement quantities: a line of sight LOS identification result; a time of arrival TOA estimation result; an angle of arrival AOA estimation result; an LOS identification result corresponding to each path in a first path set; a delay corresponding to each path in a second path set; an amplitude corresponding to each path in a third path set; or a phase corresponding to each path in a fourth path set. At least two of the first path set, the second path set, the third path set, and the fourth path set are the same or different.

With reference to the fourth aspect, in some implementations of the fourth aspect, the first device is an access network device, the channel measurement result is obtained based on first channel measurement, and the first channel measurement includes measuring a sounding reference signal from a terminal device; or the first device is a terminal device, the channel measurement result is obtained based on second channel measurement, and the second channel measurement includes measuring a positioning reference signal or a channel state information reference signal from an access network device; or the first device is a first terminal device, the channel measurement result is obtained based on third channel measurement, and the third channel measurement includes measuring a sidelink positioning reference signal from a second terminal device.

With reference to the fourth aspect, in some implementations of the fourth aspect, the AI positioning model further corresponds to one of the following reporting methods: a measurement result of each path in a same measurement quantity is reported independently; or the measurement result of each path in the same measurement quantity is reported differentially.

With reference to the fourth aspect, in some implementations of the fourth aspect, the channel measurement result is included in a measurement report, and that the measurement result of each path in the same measurement quantity is reported differentially includes: the measurement result of each path in the same measurement quantity in a same measurement report is reported differentially.

That is, the measurement result of each path in the same measurement quantity in different measurement reports is reported independently.

For beneficial effect of the fourth aspect and some implementations of the fourth aspect, correspondingly refer to related descriptions in the third aspect. Details are not described herein again.

According to a fifth aspect, a communication apparatus is provided. The apparatus includes: a transceiver unit, configured to receive indication information from a location management function network element, where the indication information indicates an AI positioning function. The transceiver unit is further configured to send a channel measurement result to the location management function network element based on the indication information, where a measurement quantity corresponding to the channel measurement result corresponds to the AI positioning function indicated by the indication information.

Optionally, a processing unit is configured to: determine the AI positioning function based on the indication information, and determine the measurement quantity corresponding to the AI positioning function.

The transceiver unit may perform receiving and sending processing in the first aspect, and the processing unit of the communication apparatus may perform processing other than the receiving and sending in the first aspect.

According to a sixth aspect, a communication apparatus is provided. The apparatus includes: a transceiver unit, configured to send indication information to a first device, where the indication information indicates an AI positioning function. The transceiver unit is further configured to receive a channel measurement result from the first device, where a measurement quantity corresponding to the channel measurement result corresponds to the AI positioning function indicated by the indication information.

Optionally, a processing unit is configured to: determine the indication information, and perform AI positioning on a UE after receiving the channel measurement result.

The transceiver unit may perform receiving and sending processing in the second aspect, and the processing unit of the communication apparatus may perform processing other than the receiving and sending in the second aspect.

According to a seventh aspect, a communication apparatus is provided. The apparatus includes: a transceiver unit, configured to receive indication information from a location management function network element, where the indication information indicates an AI positioning model. The transceiver unit is further configured to send a channel measurement result to the location management function network element based on the indication information, where a measurement quantity corresponding to the channel measurement result corresponds to the AI positioning model indicated by the indication information.

Optionally, a processing unit is configured to: determine the AI positioning model based on the indication information, and determine the measurement quantity corresponding to the AI positioning model. The transceiver unit may perform receiving and sending processing in the third aspect, and the processing unit of the communication apparatus may perform processing other than the receiving and sending in the third aspect.

According to an eighth aspect, a communication apparatus is provided. The apparatus includes: a transceiver unit, configured to send indication information to a first device, where the indication information indicates an AI positioning model. The transceiver unit is further configured to receive a channel measurement result from the first device, where a measurement quantity corresponding to the channel measurement result corresponds to the AI positioning model indicated by the indication information.

Optionally, a processing unit is configured to: determine the indication information, and perform AI positioning on a UE after receiving the channel measurement result.

The transceiver unit may perform receiving and sending processing in the fourth aspect, and the processing unit of the communication apparatus may perform processing other than the receiving and sending in the fourth aspect.

According to a ninth aspect, a communication apparatus is provided, including a processor. The processor is configured to execute a computer program, to enable the apparatus to perform the method in any one of the first aspect to the fourth aspect and the possible implementations of the first aspect to the fourth aspect.

Optionally, there are one or more processors.

Optionally, the communication apparatus further includes a memory, the memory is configured to store the computer program, and there are one or more memories.

Optionally, the memory may be integrated with the processor, or the memory and the processor are separately disposed, or the memory is located in the processor.

Optionally, the communication apparatus further includes a transceiver circuit, for example, a transceiver or an input/output circuit.

According to a tenth aspect, a communication system is provided, including a first device and a location management function network element. The first device is configured to perform the method in any one of the first aspect or the third aspect and the possible implementations of the first aspect or the third aspect. The location management function network element is configured to perform the method in any one of the second aspect or the fourth aspect and the possible implementations of the second aspect or the fourth aspect.

According to an eleventh aspect, a computer-readable storage medium is provided. The computer-readable storage medium stores a computer program or code. When the computer program or the code is run on a computer, the computer is enabled to perform the method in any one of the first aspect to the fourth aspect and the possible implementations of the first aspect to the fourth aspect.

According to a twelfth aspect, a chip is provided, including at least one processor. The processor is configured to run a computer program, to enable an apparatus in which the chip is installed to perform the method in any one of the first aspect to the fourth aspect and the possible implementations of the first aspect to the fourth aspect.

The chip may include an output circuit or interface configured to send information or data and an input circuit or interface configured to receive information or data.

According to a thirteenth aspect, a computer program product is provided. The computer program product includes computer program code. When the computer program code is run on a computer, the computer is enabled to perform the method in any one of the first aspect to the fourth aspect and the possible implementations of the first aspect to the fourth aspect.

**BRIEF DESCRIPTION OF DRAWINGS**

FIG. 1 is a diagram of a wireless communication system 100 suitable for an embodiment of this application;

FIG. 2 is a diagram of a wireless communication system 200 suitable for an embodiment of this application;

FIG. 3 is a diagram of a wireless communication system 300 suitable for an embodiment of this application;

FIG. 4 is a diagram of network elements according to an embodiment of this application;

FIG. 5 is a diagram of an AI/ML network element or module;

FIG. 6 is a diagram of an AI positioning model framework;

FIG. 7 is a diagram of TDOA positioning;

FIG. 8 is a diagram of an LOS and an NLOS;

FIG. 9 is a schematic flowchart of a communication method 900 according to an embodiment of this application;

FIG. 10 is a schematic flowchart of a communication method 1000 according to an embodiment of this application;

FIG. 11 is a schematic flowchart of a communication method 1100 according to an embodiment of this application;

FIG. 12 is a schematic flowchart of a communication method 1200 according to an embodiment of this application;

FIG. 13 is a diagram of a communication apparatus 1300 according to an embodiment of this application;

FIG. 14 is a diagram of another communication apparatus 1400 according to an embodiment of this application; and

FIG. 15 is a diagram of a chip system 1500 according to an embodiment of this application.

## DESCRIPTION OF EMBODIMENTS

The following describes technical solutions in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation mobile communication system, or a converged system of a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet-of-things (internet-of-things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device. It may be understood that the terminal device/network device in this application may be replaced with a first device, which performs a corresponding communication method in this application with a location management function network element.

The terminal device in embodiments of this application includes various devices having a wireless communication function, and may be configured to connect to a person, an object, a machine, or the like. The terminal device may be widely used in various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, self-driving, telemedicine, smart grid, smart furniture, smart office, smart wearable, smart transportation, smart city, uncrewed aerial vehicle, robot, remote sensing, passive sensing, positioning, navigation and tracking, and self-delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, an in-vehicle device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight vehicle (for example, an uncrewed aerial vehicle, a helicopter, a multi-helicopter, a four-helicopter, or an airplane), a ship, a remote control device, a smart home device, an industrial device, an apparatus disposed in the foregoing device (for example, a communication module, a modem, or a chip in the foregoing device), or another processing device connected to a wireless modem. For ease of description, the following uses an example in which the terminal device is a terminal or a UE for description.

It should be understood that, in some scenarios, the UE may be further configured to serve as a base station. For example, the UE may serve as a scheduling entity, which provides a sidelink signal between UEs in V2X, D2D, P2P, or other scenarios.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names: a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, or M2M communication, a network-side device in a 6G network, a device that bears a base station function in a future communication system, or the like. The base station may support networks using a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a location of the mobile base station. In another example, the helicopter or the uncrewed aerial vehicle may be configured as a device for communicating with another base station.

In some deployments, the network device mentioned in embodiments of this application may be a device including a CU or a DU or including a CU and a DU, or a device including a CU control plane node (a central unit-control plane (central unit-control plane, CU-CP)), a CU user plane node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes each implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces correspond to DUs and RUs with different functions respectively. If a fronthaul interface between the DU and the RU is a common public radio interface (common public radio interface, CPRI), the DU is configured to implement one or more of baseband functions, and the RU is configured to implement one or more of radio frequency functions. If the fronthaul interface between the DU and the RU is an interface of another category, different from the implementation of the CPRI, a part of downlink and/or uplink baseband functions are migrated from the DU to the RU for implementation. For example, for a downlink, one or more of precoding (precoding), digital beamforming (beamforming, BF), or inverse fast Fourier transform (inverse fast Fourier transform, IFFT)/add cyclic prefix (cyclic prefix, CP) are migrated from the DU to the RU for implementation. For an uplink, one or more of digital beamforming (beamforming, BF) or fast Fourier transform (fast Fourier transform, FFT)/remove cyclic prefix (cyclic prefix, CP) are migrated from the DU to the RU for implementation. In a possible implementation, the interface may be an enhanced common public radio interface (enhanced common public radio interface, eCPRI). In an eCPRI architecture, different manners of splitting between the DU and the RU correspond to different categories (category, Cat) of eCPRIs, for example, an eCPRI Cat A, B, C, D, E, and F.

The eCPRI Cat A is used as an example. For downlink transmission, splitting is performed at layer mapping. The DU is configured to implement the layer mapping and one or more functions before the layer mapping (that is, one or more of encoding, rate matching, scrambling, modulation, or the layer mapping), while other functions (for example, one or more of RE mapping, digital beamforming (beamforming, BF), or inverse fast Fourier transform (inverse fast Fourier transform, IFFT)/add cyclic prefix (cyclic prefix, CP)) after the layer mapping are migrated to the RU for implementation. For uplink transmission, splitting is performed at RE demapping. The DU is configured to implement the demapping and one or more functions before the demapping (that is, one or more functions of decoding, de-rate matching, descrambling, demodulation, inverse discrete Fourier transform (inverse discrete Fourier transform, IDFT), channel equalization, or the RE demapping), while other functions (for example, one or more of digital BF or fast Fourier transform (FFT)/remove CP) after the demapping are migrated to the RU for implementation. It may be understood that, for function descriptions of DUs and RUs corresponding to various categories of eCPRIs, refer to the eCPRI specification. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be the network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including indoor or outdoor devices, handheld devices, or in-vehicle devices; or may be deployed on a water surface; or may be deployed on airplanes, balloons, and satellites in air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In embodiments of this application, the location management function network element may be a positioning node or a positioning device configured to perform positioning management on a location of a terminal device, for example, an LMF. For example, an apparatus configured to perform positioning or management on a location of a terminal device may be a location management function network element, or may be a chip system, a chip, or a circuit of the location management function network element. The chip system, the chip, or the circuit may be installed in the location management function network element. The chip system may include a chip, or may include a chip and another discrete device.

Optionally, the location management function network element may be a core network device. The core network device is a device that is in a core network (core network, CN) and that provides service support for the terminal device. The core network device may include one or more core network elements. A 5G core network is used as an example. The 5G core network includes an access and mobility management function (access and mobility management function, AMF) network element responsible for mobility management, access management, and other services, a session management function (session management function, SMF) network element responsible for session management, a user plane function (user plane function, UPF) network element responsible for user plane data packet routing and forwarding and quality of service (quality of service, QoS) control, a policy control function (policy control function, PCF) network element, and the like. The core network elements may operate independently, or may be combined to implement some control functions. For example, the AMF, the SMF, and the PCF may be combined as one core network device. All or a part of the core network elements may be independent in form, or may be integrated into a same device. This is not limited herein.

In embodiments of this application, the first device may be a terminal device or a network device, or a component (for example, a chip or a circuit) of the terminal device or the network device. Optionally, the network device may be a network device provided with one or more AI modules. For example, the network device may be one or more devices of a core network device, an access network node (RAN node), or an OAM. For example, the AI module may be a RAN intelligent controller (RAN intelligent controller, RIC), for example, a near-real-time RIC or a non-real-time RIC. For example, the near-real-time RIC is disposed in a RAN node (for example, a CU or a DU), and the non-real-time RIC is disposed in an OAM, a cloud server, a core network device, or another network device. The location management function network element is a network element for training an AI positioning model and/or storing an AI positioning model library, or is also a network element for selecting/inferring an AI positioning model. For example, an AI positioning model used for positioning is configured in the location management function network element.

For example, the first device and the location management function network element may be logically separately deployed. In different implementations, the first device and the location management function network element may be physically deployed in a same network element or different network elements. This is not limited. For example, the first device is a terminal device, the location management function network element is a server (also referred to as a host) in an over the top (over the top, OTT) system or a cloud device, and the terminal device may communicate with the server in the OTT system or the cloud device via the internet. For another example, the first device is a module (for example, a module at a physical layer) in a terminal device, and the location management function network element is another module (for example, a module at an application layer, such as an application module connected to an OTT server) in a device (for example, an LMF). It may be understood that, in embodiments of this application, the module may be implemented by hardware, software, or a combination of hardware and software. This is not limited.

Communication systems suitable for embodiments of this application are first briefly described below.

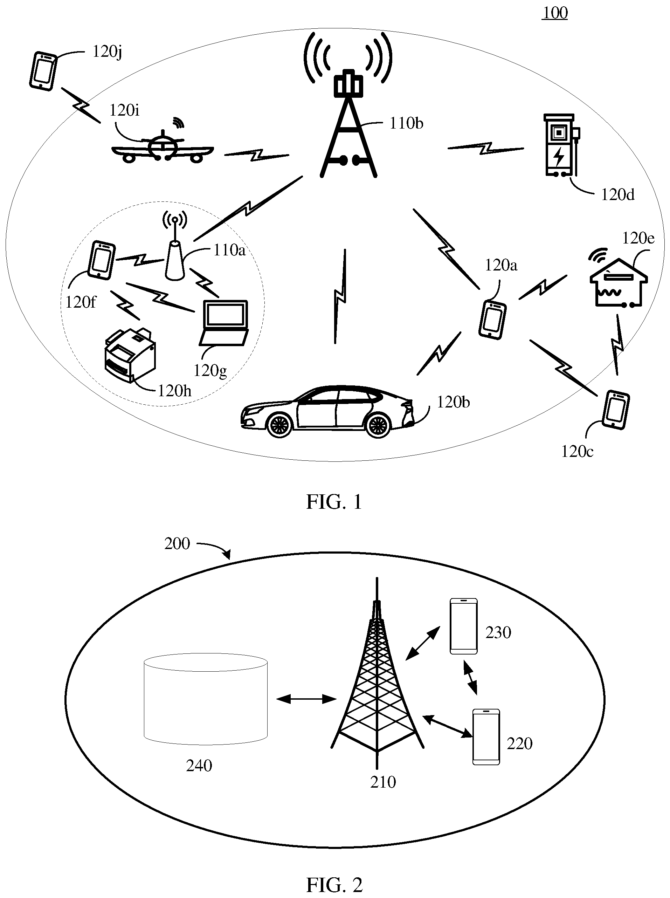

FIG. 1 is a diagram of a wireless communication system 100 suitable for an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, collectively referred to as 120) may be connected to each other or one or more network devices (110a and 110b, collectively referred to as 110) in the radio access network 100. FIG. 1 is merely a diagram. The wireless communication system may further include another device, for example, may further include a core network device, a wireless relay device, a wireless backhaul device, and/or the like not shown in FIG. 1.

In actual application, the wireless communication system may include a plurality of network devices, and may also include a plurality of terminal devices. This is not limited. One network device may serve one or more terminal devices. One terminal device may access one or more network devices. Quantities of terminal devices and network devices included in the wireless communication system are not limited in embodiments of this application.

FIG. 2 is a diagram of a wireless communication system 200 suitable for an embodiment of this application. As shown in FIG. 2, the wireless communication system 200 may include at least one network device, for example, a network device 210 shown in FIG. 2. The wireless communication system 200 may further include at least one terminal device, for example, a terminal device 220 and a terminal device 230 shown in FIG. 2. The wireless communication system 200 may further include a positioning device, for example, a positioning device 240 shown in FIG. 2. For example, the positioning device 240 is a positioning management function LMF network element, referred to as an LMF for short.

The positioning device and the network device may communicate with each other by using interface messages. For example, the network device 210 is a gNB, and the positioning device 240 is an LMF. The gNB and the LMF may exchange information by using NRPPa messages. For another example, the network device 210 is an eNB, and the positioning device 240 is an LMF. The eNB and the LMF may exchange information by using LTE positioning protocol (LTE positioning protocol, LPP) messages.

The terminal device and the positioning device may directly communicate with each other, or may communicate with each other via another device. The another device may be, for example, a network device and/or a core network element. For example, as shown in FIG. 2, the terminal device 220 and the positioning device 240 may communicate with each other via the network device 210.

Optionally, the positioning device and the network device may be different modules of a same device, or may be different separate devices.

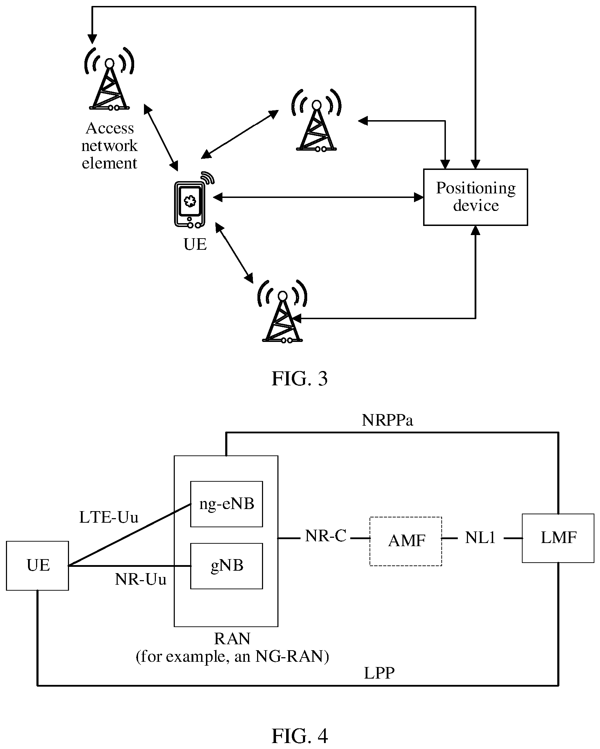

FIG. 3 is a diagram of a wireless positioning system suitable for an embodiment of this application. As shown in FIG. 3, the wireless positioning system mainly includes an access network device, a terminal device, and a positioning device. The positioning device is mainly responsible for receiving a positioning service request, collecting a positioning-related measurement result, calculating a positioning result, providing a corresponding wireless positioning service, and the like. Optionally, the positioning device may receive a positioning service request from the access network device or an upper-layer application. In an example, the positioning device may be a location management function network element, for example, an LMF. For the access network device and the terminal device, refer to the foregoing descriptions.

FIG. 4 is a diagram of devices according to an embodiment of this application. As shown in FIG. 4, a UE, a location management function network element, and an access network device are included. Optionally, an access and mobility management function (access management function, AMF) network element is further included. In an example, the access network device may be an ng-eNB or a gNB. The ng-eNB represents a 4G base station that can access a 5G core network, the gNB represents a 5G base station, and both are NR-RAN network elements. The radio access network device or the base station mentioned in embodiments of this application may be an ng-eNB or a gNB. This is not limited. The UE and the radio access network device communicate with each other via a corresponding interface. For example, the UE and the gNB communicate with each other via an NR-Uu interface, and the UE and the ng-eNB communicate with each other via an LTE-Uu interface. In embodiments of this application, the NR-Uu interface and the LTE-Uu interface are used for positioning-related signaling and/or data transmission. In addition, an NG-C interface is used for communication between the gNB and the AMF and communication between the ng-eNB and the AMF, for example, positioning-related signaling transmission. An NL1 interface is used for communication between the AMF and the LMF, for example, positioning-related signaling transmission. Optionally, the UE interacts with the LMF based on the LTE positioning protocol (LTE positioning protocol, LPP) protocol, the NG-RAN interacts with the LMF based on the NRPPa protocol, and the NRPPa protocol is used for transparent transmission across the AMF. It should be understood that the NG-RAN is merely used as an example. When the technical solutions of this application are applied to a future wireless communication system, for example, a 6G system, the NG-RAN is correspondingly an access network device in the 6G system. Similarly, names of network elements, names of interfaces between the network elements, message names, and the like are merely examples. In a future wireless communication system, network elements, interfaces, and interface messages that have same or similar functions may be used to implement the technical solutions of this application.

In addition, to support a machine learning function in a wireless communication system, an AI node may be further introduced into the wireless communication system.

Optionally, the communication system further includes at least one AI node.

Optionally, the AI node is deployed in one or more of the following: a network device, a terminal device, a core network, or a positioning device. Alternatively, the AI node may be deployed separately, for example, deployed at a position other than any one of the foregoing devices. The AI node may communicate with another device in the communication system. The another device may be, for example, one or more of the following: a network device, a terminal device, a core network element, or a positioning device.

Optionally, the AI node is configured to perform an AI-related operation. For example, the AI-related operation may include, for example, one or more of model failure testing, model performance testing, model training testing, or data collection.

For example, the network device may forward, to the AI node, data that is related to an AI positioning model and that is reported by the terminal device, and the AI node performs an AI-related operation. For another example, the network device or the terminal device may forward data related to an AI positioning model to the AI node, and the AI node performs an AI-related operation. For another example, the AI node may send output, for example, one or more of a trained neural network model, a model evaluation result, or a model testing result, of the AI-related operation to the network device and/or the terminal device. For example, the AI node may directly send the output of the AI-related operation to the network device and the terminal device. For another example, the AI node may send the output of the AI-related operation to the terminal device via the network device. For another example, the AI node may send the output of the AI-related operation to the network device via the terminal device.

It may be understood that, a quantity of AI nodes is not limited in this application. For example, when there are a plurality of AI nodes, the plurality of AI nodes may be obtained through division based on functions. For example, different AI nodes are responsible for different functions.

It may be further understood that the AI nodes may be devices independent of each other, or may be integrated into a same device to implement different functions, or may be network elements in hardware devices, or may be software functions running on dedicated hardware, or may be virtualized functions instantiated on a platform (for example, a cloud platform). Specific forms of the AI nodes are not limited in this application.

For example, the AI node may be an AI network element or an AI module.

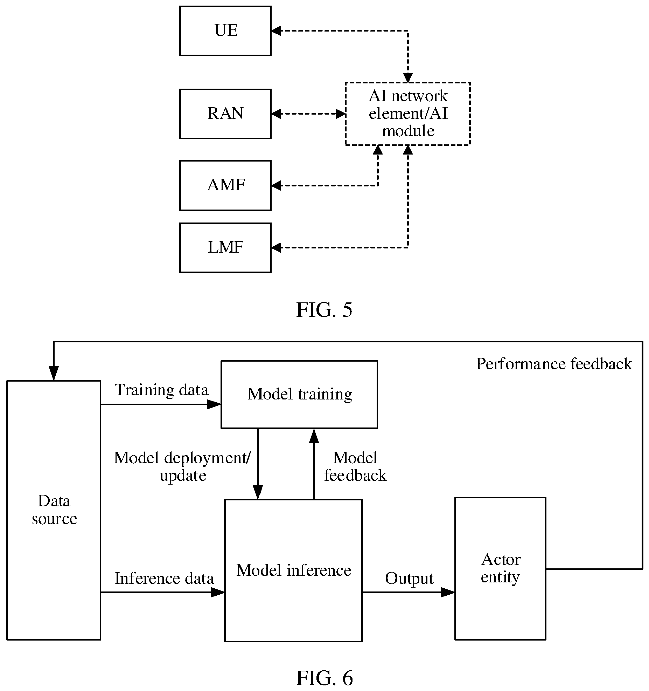

FIG. 5 is a diagram of an AI/ML network element or module. If an AI network element is introduced, it indicates that the AI network element corresponds to an independent network element. If an AI module is introduced, the AI module may be located inside a network element. As described above, network elements in embodiments of this application include a UE, a radio access network device, and an LMF, and optionally, may further include an AMF. One or more of the UE, the radio access network device, the AMF (if the network element is included), and the LMF may have an AI module disposed inside. Alternatively, a corresponding AI network element is introduced for one or more of the UE, the radio access network device, the AMF, and the LMF. Alternatively, the two manners are used in combination. This is not limited in this application.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of a quantity of layers of a neural network, a width of the neural network, a connection relationship between layers, a weight of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of the neural network.

One AI module may have one or more models. One model may obtain one piece of output through inference, and the output includes one or more parameters. Learning processes, training processes, or inference processes of different models may be deployed on different nodes or devices, or may be deployed on a same node or device.

It should be understood that if a corresponding AI network element is introduced for one or more of the UE, the radio access network device, the AMF, and the LMF, and an AI operation is performed by the corresponding AI network element, the UE, the radio access network device, the AMF, or the LMF needs to send information related to the AI operation to the corresponding AI network element. For example, a corresponding AI network element is introduced for the LMF, and the AI network element performs an inference operation of an AI model. In this case, after receiving a channel measurement report from a first device (for example, the access network device or the UE), the LMF sends a channel measurement result carried in the channel measurement report to the corresponding AI network element. For another example, in uplink positioning, a corresponding AI network element is introduced for the access network device. It is assumed that input of an AI model is a channel feature extracted from a channel measurement result. The channel measurement result is obtained by the access network device by measuring an SRS of the UE. Therefore, after obtaining the channel measurement result, the access network device sends the channel measurement result to the corresponding AI network element. The AI network element extracts the channel feature from the channel measurement result by using the AI model, and then returns the extracted channel feature to the access network device, so that the access network device sends the channel feature to the LMF.

It may be further understood that FIG. 1 to FIG. 5 are simplified example diagrams for ease of understanding. The wireless communication system may further include another network device, another terminal device, or another AI node, which is not shown in FIG. 1 to FIG. 5.

For ease of understanding embodiments of this application, the following first briefly describes terms in embodiments of this application.

(1) Artificial intelligence AI:

The artificial intelligence enables machines to learn and accumulate experience, so that the machines can resolve problems such as natural language understanding, image recognition, and chess playing that may be resolved by humans through experience. The artificial intelligence may be understood as intelligence represented by machines manufactured by people. Generally, the artificial intelligence is a technology of presenting human intelligence by using a computer program. An objective of the artificial intelligence includes understanding intelligence by building symbolic reasoning or computer programs for reasoning.

(2) Machine learning (machine learning, ML):

ML is an implementation of artificial intelligence. The machine learning is a method of enabling machines to learn, so that the machines can implement functions that cannot be implemented through direct programming. In practice, the machine learning is a method of training a model by using data and then performing prediction by using the model. There are many machine learning methods, such as a neural network (neural network, NN), a decision tree, and a support vector machine. A machine learning theory is mainly to design and analyze some algorithms that enable computers to learn automatically. A machine learning algorithm is an algorithm of automatically analyzing data to obtain a rule and predicting unknown data by using the rule.

(3) AI model:

The AI model is an algorithm or a computer program that can implement an AI function. The AI model represents a mapping relationship between input and output of the model. In other words, the AI model is a function model that maps input in a dimension to output in a dimension. A parameter of the function model may be obtained through machine learning and training. For example, $f(x)=mx^2+n$ is a quadratic function model, and may be considered as an AI model, m and n are parameters of the AI model, and m and n may be obtained through machine learning and training. For example, an AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

Design of the AI model mainly includes a data collection phase (for example, collection of training data and/or inference data), a model training phase, and a model inference phase, and may further include an inference result application phase. In the data collection phase, a data source (data source) is used to provide a training dataset and inference data. In the model training phase, an AI model is obtained through analysis or training by using training data (training data) provided by the data source. Obtaining the AI model through learning by using a model training host is equivalent to obtaining a mapping relationship between input and output of the AI model through learning by using the training data. In the model inference phase, the AI model trained in the model training phase is used to perform inference based on the inference data provided by the data source, to obtain an inference result. This phase may also be understood as inputting the inference data into the AI model to obtain output by using the AI model. The output is the inference result. The inference result may indicate a configuration parameter used (executed) by an actor object, and/or an operation performed by the actor object. The inference result is released in the inference result application phase. For example, the inference result may be centrally planned by an actor (actor) entity. For example, the actor entity may send the inference result to one or more actor objects (for example, a core network device, an access network device, or a terminal device) for execution. For another example, the actor entity may further feed back performance of the AI model to the data source, to facilitate subsequent update training of the AI model.

It may be understood that the AI model may be implemented by using a hardware circuit, software, or a combination of software and hardware. This is not limited. A non-limitative example of the software includes program code, a program, a subprogram, an instruction, an instruction set, code, a code segment, a software module, an application program, a software application program, or the like.

(4) Neural network (neural network, NN):

The neural network is a specific implementation form of AI or machine learning. According to the universal approximation theorem, the neural network can approximate any continuous function in theory, so that the neural network has a capability of learning any mapping.

The neural network may include neurons. The neuron may be an operation unit that uses $x_s$ and an intercept of 1 as input. The neural network is a network formed by connecting many single neurons, that is, output of a neuron may be input of another neuron. Input of each neuron may be connected to a local receptive field of a previous layer to extract a feature of the local receptive field. The local receptive field may be a region including several neurons.

For example, a type of an AI model is a neural network. The AI model in this disclosure may be a deep neural network (deep neural network, DNN). Based on network construction modes, the DNN may include a feedforward neural network (feedforward neural network, FNN), a convolutional neural network (convolutional neural network, CNN), a recurrent neural network (recurrent neural network, RNN), and the like.

(5) Fingerprint:

Because multipath propagation of a signal is environment dependent, a multipath structure of a channel at each location is unique. A radio wave transmitted by a terminal is reflected and refracted, generating a multipath signal that is in a specific mode and that is closely related to an ambient environment. Such a multipath feature may be referred to as "fingerprint" information of the location. A manner of performing positioning based on "fingerprint" information may be referred to as fingerprint positioning. For example, positioning on a mobile terminal is implemented based on "fingerprint" information of the mobile terminal.

(6) Training dataset and inference data:

In the machine learning field, a ground truth (ground truth) is usually considered as accurate data or true data.

The training dataset is used to train an AI model. The training dataset may include input of the AI model, or include input and target output of the AI model. The training dataset includes one or more pieces of training data. The training data may include a training sample input into the AI model, or may also include the target output of the AI model. The target output may also be referred to as a tag, a sample tag, or a tag sample. The tag is a ground truth.

In the communication field, the training dataset may include simulated data collected by a simulation platform, may also include experimental data collected in an experiment scenario, or may also include actual measured data collected in an actual communication network. Geographical environments and channel conditions in which data is generated are different. For example, indoor or outdoor environments, moving speeds, frequency bands, or antenna configurations are different. Therefore, collected data may be classified when the data is obtained. For example, data with a same channel propagation environment and a same antenna configuration is classified into one type.

Model training is essentially learning some features of training data from the training data. During training of an AI model (for example, a neural network model), because output of the AI model is expected to be as close as possible to a value that is actually expected to be predicted, a current predicted value of the network may be compared with a target value that is actually expected, and then a weight vector of each layer of the AI model is updated based on a difference between the two (certainly, an initialization process is usually performed before the first update, that is, a parameter is preconfigured for each layer of the AI model). For example, if the predicted value of the network is larger, the weight vector is adjusted to obtain a smaller predicted value. The weight vector is continuously adjusted until the AI model can predict the target value that is actually expected or a value that is quite close to the target value that is actually expected. Therefore, "how to compare the predicted value with the target value to obtain the difference" needs to be predefined. This leads to a loss function (loss function) or an objective function (objective function). The loss function and the objective function are important equations for measuring the difference between the predicted value and the target value. The loss function is used as an example. A larger output value (loss) of the loss function indicates a greater difference. In this case, the training of the AI model is a process of minimizing the loss, so that a value of the loss function is less than a threshold, or the value of the loss function meets a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of the neuron.

The inference data may be used as input of a trained AI model for inference by the AI model. During model inference, the inference data may be input into the AI model to obtain corresponding output, namely, an inference result.

FIG. 6 shows an AI application framework.

In the data collection phase, a data source (data source) is used to provide a training dataset and inference data. In the model training phase, an AI model is obtained through analysis or training by using training data (training data) provided by the data source. The AI model represents a mapping relationship between input and output of the model.

Obtaining the AI model through learning by using a model training host is equivalent to obtaining the mapping relationship between the input and the output of the model through learning by using the training data. In the model inference phase, the AI model trained in the model training phase is used to perform inference based on the inference data provided by the data source, to obtain an inference result. This phase may also be understood as inputting the inference data into the AI model to obtain output by using the AI model. The output is the inference result. The inference result may indicate a configuration parameter used (executed) by an actor object, and/or an operation performed by the actor object. The inference result is released in the inference result application phase. For example, the inference result may be centrally planned by an actor (actor) entity. For example, the actor entity may send the inference result to one or more actor objects (for example, a network device or a terminal device) for execution. For another example, the actor entity may further feed back performance of the model to the data source, to facilitate subsequent update training of the model.

It may be understood that, a communication system may include a network element having an artificial intelligence function. The foregoing phases related to AI model design may be performed by one or more network elements having the artificial intelligence function. In a possible design, the AI function (for example, an AI module or an AI entity) may be configured in an existing network element in the communication system to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, or the like. The name is not limited in embodiments of this application. For example, the AI network element may be directly connected to a network device in the communication system, or may be indirectly connected to the network device via a third-party network element. The third-party network element may be a core network element such as an authentication management function (authentication management function, AMF) network element or a user plane function (user plane function, UPF) network element, an operation administration and maintenance (operation administration and maintenance, OAM), a cloud server, or another network element. This is not limited. For example, the independent network element may be deployed on one or more of a network device side, a terminal device side, or a core network side. Optionally, the independent network element may be deployed on a cloud server.

Training processes of different models may be deployed on different devices or nodes, or may be deployed on a same device or node. Inference processes of different models may be deployed on different devices or nodes, or may be deployed on a same device or node. For example, a model parameter of the AI model may include one or more of the following: a structure parameter of the model (for example, a quantity of layers of the model and/or a weight), an input parameter of the model (for example, an input dimension or a quantity of input ports), or an output parameter of the model (for example, an output dimension or a quantity of output ports). It may be understood that, the input dimension may be a size of a piece of input data. For example, when the input data is a sequence, an input dimension corresponding to the sequence may indicate a length of the sequence. The quantity of input ports may be an amount of input data. Similarly, the output dimension may be a size of a piece of output data. For example, when the output data is a sequence, an output dimension corresponding to the sequence may indicate a length of the sequence. The quantity of output ports may be an amount of output data.

(7) Time difference of arrival (time difference of arrival, TDOA): It is a method of performing positioning by using a time difference.

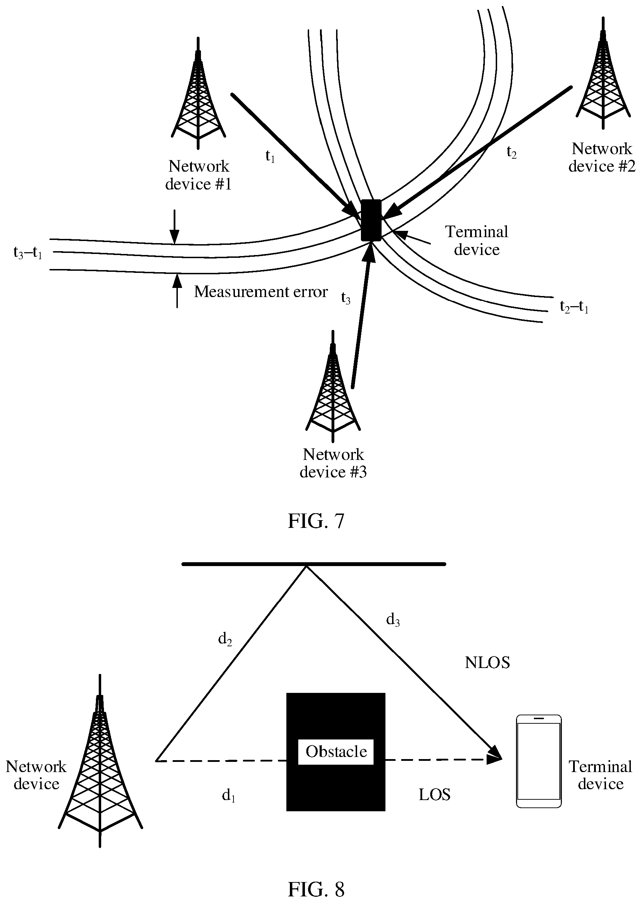

FIG. 7 is a diagram of TDOA positioning. As shown in FIG. 7, it is assumed that a distance between a network device #1 and a terminal device is d1, and a transmission time consumed by signal transmission between the network device #1 and the terminal device is t1; a distance between a network device #2 and the terminal device is d2, and a transmission time consumed by signal transmission between the network device #2 and the terminal device is t2; and a distance between a network device #3 and the terminal device is d3, and a transmission time consumed by signal transmission between the network device #3 and the terminal device is t3.

In TDOA, for example, a plurality of network devices may send reference signals, for example, positioning reference signals (positioning reference signal, PRS), to a terminal device, and the terminal device determines a location of the terminal device by measuring a TDOA between the reference signals. The TDOA between the reference signals may also be referred to as a reference signal time difference (reference signal time difference, RSTD). FIG. 7 is used as an example. It is assumed that a reference signal sent by the network device #1 to the terminal device is P1, a reference signal sent by the network device #2 to the terminal device is P2, and a reference signal sent by the network device #3 to the terminal device is P3. The terminal device measures a TDOA between P2 and P1, that is, t2-t1. Based on t2-t1, the terminal device may infer a distance difference d2-d1 between the network device #2 and the network device #1, and obtain a curve. Each point on the curve satisfies the distance difference d2-d1 between the network device #2 and the network device #1. Similarly, the terminal device measures a TDOA between P3 and P1, that is, t3-t1. Based on t3-t1, the terminal device may infer a distance difference d3-d1 between the network device #3 and the network device #1, and obtain another curve. Each point on the curve satisfies the distance difference d3-d1 between the network device #3 and the network device #1. A location of the terminal device may be determined by using an intersection point of the foregoing two curves, which may be represented by using a mathematical model, as shown in the following formula 1:

$$\begin{cases} \sqrt{(a_2 - a)^2 + (b_2 - b)^2} - \sqrt{(a_1 - a)^2 + (b_1 - b)^2} = d_2 - d_1 = c(t_2 - t_1) \\ \sqrt{(a_3 - a)^2 + (b_3 - b)^2} - \sqrt{(a_1 - a)^2 + (b_1 - b)^2} = d_3 - d_1 = c(t_3 - t_1) \end{cases} \quad (1)$$

$(a_i, b_i)$ represent location coordinates of a network device #i. $(a, b)$ represent to-be-obtained location coordinates of the terminal device. For example, a represents a to-be-obtained location coordinate of the terminal device on an X-axis, and b represents a to-be-obtained location coordinate of the terminal device on a Y-axis. c represents a speed of light.

Due to a synchronization error between different network devices, a corresponding measured value is uncertain to some extent, which corresponds to a range represented by dashed lines in FIG. 7.

The foregoing describes, with reference to FIG. 7, a method of performing positioning based on reference signals sent by network devices to a terminal device. Such a method may also be referred to as a downlink TDOA (downlink TDOA, DL-TDOA) method or an observed time difference of arrival OTDOA method. Similarly, positioning may alternatively be performed based on a reference signal, for example, an SRS, sent by a terminal device to a network device. Such a positioning method may be referred to as an uplink TDOA (uplink TDOA, UL-TDOA) method.

It may be understood that, in addition to time difference measurement, positioning may be performed through angle measurement. The angle may be an angle of arrival (AOA) or an angle of departure (angle of departure, AOD). The angle of arrival represents an included angle between a direction in which a receiving end receives a signal and a reference direction. The angle of departure represents an included angle between a direction in which a transmitting end sends a signal and the reference direction. The reference direction may be a direction determined based on a location and/or a shape of an antenna.

In an actual communication scenario, due to impact of noise and interference, there is a specific measurement error in a measured value of the time or the angle, and correspondingly, there is also a specific error in a positioning result.

FIG. 8 is a diagram of an LOS and an NLOS. As shown in FIG. 8, an LOS (a dashed line in FIG. 8) between a network device and a terminal device is blocked by an obstacle, and a reference signal transmitted between the network device and the terminal device actually passes through a reflection NLOS (a solid line in FIG. 8). It can be learned from the figure that a length (that is, d2+d3) of the NLOS is greater than a length (that is, d1) of the LOS. If the NLOS is considered as an LOS during location estimation, a large measurement error may occur. Therefore, classification of the LOS and the NLOS is also important for positioning precision.

In an AI-based positioning technology, an AI positioning model is usually deployed in an LMF. The AI positioning model uses a channel measurement result reported by a channel measurement network element as input, and outputs a location of a terminal device. Therefore, the channel measurement network element usually needs to report a channel measurement report to the location management function network element. For example, protocols support, in uplink positioning, that the LMF sends an NRPPa measurement request to a gNB, to obtain a measurement result. Correspondingly, the gNB measures an SRS signal sent by the UE to obtain an RSRPP result, and sends the RSRPP result to the LMF. The RSRPP is defined as an average linear power value of an $i^{th}$ path of a channel response obtained by measuring the SRS on a corresponding subband. In addition, protocols support that reporting methods of RSRPP results include reporting of an absolute value of RSRPP and reporting of a differential value of RSRPP. In a current solution, during terminal device positioning function management of a location management function network element, an AI positioning function or an AI positioning model, a monitoring policy of the AI positioning function or the AI positioning model, an update policy of the AI positioning function or the AI positioning model, a measurement quantity corresponding to the AI positioning function or the AI positioning model, and a reporting method of a measurement result obtained by measuring the measurement quantity are usually indicated separately by using a plurality of pieces of signaling, or are indicated separately by using a plurality of fields in one piece of signaling. This may cause high signaling overheads.

In view of this, embodiments of this application provide a communication method and apparatus. Based on a correspondence between an input/output measurement quantity of an AI positioning case and an AI positioning function or an AI positioning model, the AI positioning function or the AI positioning model may be indicated by sending indication information, so that a first terminal device can determine the measurement quantity corresponding to the AI positioning function or the AI positioning model, that is, both the AI positioning function or the AI positioning model and the measurement quantity corresponding to the AI positioning function or the AI positioning model can be determined by obtaining the indication information, thereby reducing signaling overheads.

The following describes, in detail with reference to accompanying drawings, the communication method provided in embodiments of this application. Embodiments provided in this application may be applied to the communication system shown in FIG. 1 or FIG. 2. This is not limited.

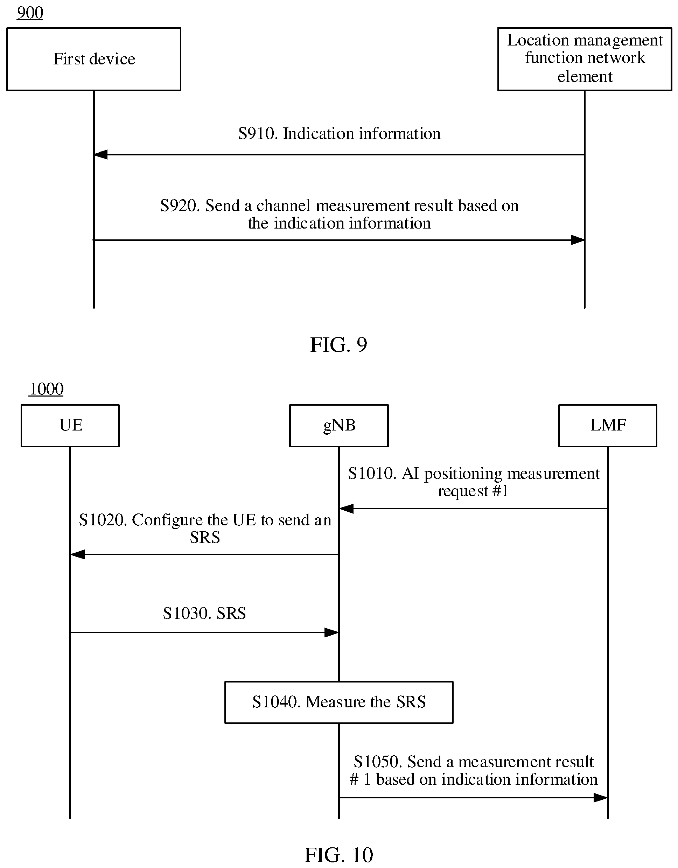

FIG. 9 is a schematic flowchart of a communication method 900 according to an embodiment of this application. As shown in FIG. 9, the method 900 may include the following steps. It should be understood that the method may be performed by a first device and a location management function network element, or may be performed by chips or circuits of the first device and the location management function network element. This is not limited in this application. For ease of description, the following uses an example in which the first device and the location management function network element perform the method for description.

S910. The location management function network element sends indication information to the first device (that is, a network element that performs channel measurement, referred to as a channel measurement network element for short, or referred to as a reference signal measurement node or the like). Correspondingly, the first device receives the indication information from the location management function network element.

The indication information indicates an AI positioning function or an AI positioning model, the AI positioning function or the AI positioning model belongs to a plurality of AI positioning functions or AI positioning models, the plurality of AI positioning functions or AI positioning models correspond to a plurality of different measurement quantity sets, and the measurement quantity set includes one or more measurement quantities.

In this embodiment of this application, an AI model represents an AI model used for positioning, referred to as an AI positioning model for short.

Optionally, the indication information is carried in a measurement request message from the location management function network element. For example, the location management function network element sends the measurement request message to the first device, and the measurement request message carries the indication information. The measurement request message is used to indicate the first device to perform channel measurement. In other words, the measurement request message is used to trigger the first device to perform channel measurement.

Optionally, the measurement request message and the indication information that are sent by the location management function network element may be sent together or independently. In other words, the indication information may not be carried in the measurement request message. In this case, the measurement request message and the indication information may be sent simultaneously or separately. This is not limited in this application.

S920. The first device sends a channel measurement result to the location management function network element based on the indication information. Correspondingly, the location management function network element receives the channel measurement result from the first device.

A measurement quantity corresponding to the channel measurement result corresponds to the AI positioning function or the AI positioning model indicated by the indication information.

Optionally, the channel measurement result is included in a measurement report. For example, the first device sends the measurement report to the location management function network element, and the measurement report carries the channel measurement result.

In this application, a channel measurement report is used to report a channel measurement result (or a channel feature extracted from the channel measurement result, where the channel measurement result is used as an example for description in embodiments), and the channel measurement result is used by the location management function network element to perform an AI-related operation, for example, model inference based on an AI positioning model. Therefore, the AI positioning model uses the channel measurement result (or the channel feature extracted from the channel measurement result) as input, and outputs a location of a terminal device. Therefore, a purpose of the channel measurement report is to report the input of the AI positioning model. Based on this premise, the channel measurement result in the channel measurement report in this application is determined based on the AI positioning function or the AI positioning model indicated by the indication information from the location management function network element. The channel measurement network element (for example, a UE or a gNB) feeds back, to the location management function network element, the measurement quantity corresponding to the channel measurement result corresponding to the AI positioning function or the AI positioning model. Based on correspondences between input/output measurement quantities for AI positioning cases and different AI positioning functions or AI positioning models, the AI positioning function or the AI positioning model may be determined by using the indication information, and then the measurement quantity corresponding to the AI positioning function or the AI positioning model may be determined, to perform positioning for the location of the terminal device. Compared with indicating the AI positioning function or the AI positioning model and the measurement quantity corresponding to the AI positioning function or the AI positioning model through a plurality of times of signaling, this can reduce signaling overheads.

For example, in an uplink positioning scenario, when the first device is a network device, the channel measurement result is obtained based on first channel measurement, and the first channel measurement includes: The network device measures a sounding reference signal (for example, an SRS) from a terminal device.

For example, in a downlink positioning scenario, when the first device is a terminal device, the channel measurement result is obtained based on second channel measurement, and the second channel measurement includes: The terminal device measures a positioning reference signal (for example, a PRS or a preamble (preamble)) or a channel state information reference signal (channel state information reference signal, CSI-RS) from an access network device.

For example, in a sidelink positioning scenario, when the first device is a first terminal device, the channel measurement result is obtained based on third channel measurement, and the third channel measurement includes: The first terminal device measures a sidelink positioning reference signal (sidelink positioning reference signal, SL-PRS) from a second terminal device.

In this embodiment of this application, the first device may be a terminal device or a network device. Optionally, when the first device is a network device, an AI positioning model configured in the network device is used for assisted positioning, and an AI positioning model configured in the location management function network element is used for direct positioning.

In this embodiment of this application, input of the AI positioning model is a channel measurement result, and output of the AI positioning model is used to directly or indirectly determine the location of the terminal device. For example, the output of the AI positioning model may be the location of the terminal device, or may be assisted positioning information used to determine the location of the terminal device. This is not limited herein.

In an example, the channel measurement result may be used as input of the AI positioning model. For the AI positioning model, input of the AI positioning model may be the channel measurement result obtained based on reference signal measurement, and output of the AI positioning model may be the location of the terminal device.

For example, the AI positioning model is used to perform direct positioning for the location of the terminal device. In this case, input of the AI positioning model is the channel measurement result obtained based on reference signal measurement, and output of the AI positioning model is the location of the terminal device, for example, location coordinates of the terminal device on an X-axis and a Y-axis.

For another example, the AI positioning model is used to perform assisted positioning (or referred to as indirect positioning) for the location of the terminal device. In this case, input of the AI positioning model is the channel measurement result obtained based on reference signal measurement, output of the AI positioning model is assisted positioning information, and the assisted positioning information is used to determine the location of the terminal device. The assisted positioning information includes but is not limited to at least one of the following: an LOS probability, an AOA, an AOD, a time of arrival (time of arrival, TOA), or a TDOA between reference signals.

In another example, the assisted positioning information based on the channel measurement result may be used as input of the AI positioning model. For the AI positioning model, input of the AI positioning model may be the assisted positioning information based on the channel measurement result, and output of the AI positioning model may be the location of the terminal device. The assisted positioning information based on the channel measurement result may be obtained in a conventional manner, or may be output of an AI positioning model. This is not limited. The assisted positioning information includes but is not limited to at least one of the following: an LOS probability, an AOA, an AOD, a time of arrival (time of arrival, TOA), or a TDOA between reference signals.

For example, the AI positioning model is used to perform direct positioning for the location of the terminal device. In this case, input of the AI positioning model is the assisted positioning information based on the channel measurement result, and output of the AI positioning model is the location of the terminal device.

For another example, the AI positioning model is used to perform assisted positioning (or referred to as indirect positioning) for the location of the terminal device. In this case, input of the AI positioning model is the assisted positioning information based on the channel measurement result, output of the AI positioning model is another piece of assisted positioning information, and the another piece of assisted positioning information is used to determine the location of the terminal device.

It should be noted that, an example in which the channel measurement result is obtained through channel measurement based on a reference signal is mainly used for description in this embodiment of this application. This is not limited. For example, the channel measurement result may alternatively include a pedestrian dead reckoning (pedestrian dead-reckoning, PDR) measurement result of a terminal. Alternatively, the channel measurement result may include an environmental surveillance and identification result of a camera, for example, an environmental surveillance and identification result of a surveillance camera in an indoor factory.

In this embodiment of this application, the AI positioning function or the AI positioning model corresponds to one or more of the following measurement quantities:

(1) Line of sight LOS identification result

For example, the LOS identification result includes an LOS or an NLOS, and/or an LOS probability.

The LOS means that a signal is transmitted between a transmit antenna and a receive antenna at a distance over which "they can see each other". It may be understood as that there is no obstacle affecting signal transmission between the two antennas, and the signal can be completely transmitted. The non-line of sight means that a signal is transmitted between a transmit antenna and a receive antenna at a distance over which "they cannot see each other". It may be understood as that there is an obstacle affecting signal transmission between the two antennas, and the signal cannot be completely transmitted. The LOS probability may be used to determine an NLOS degree of a channel environment. At different NLOS degrees (that is, different channel conditions), the channel measurement result affects inference precision of the AI positioning model to different degrees. Therefore, the first device may learn of the NLOS degree of the channel based on the channel measurement result, and then learn of a current channel condition. For example, LOS(1) or NLOS(0) may indicate that an LOS between a network device and a terminal device is not blocked by an obstacle, and a reference signal transmitted between the network device and the terminal device is not affected.

A channel propagation condition of an LOS path is a scenario in which there is a direct path, but an NLOS path may also be included. In other words, there is at least one LOS path (that is, a pure LOS path (pure LOS)), but a quantity of NLOS paths is not limited. A channel propagation condition of an NLOS path is a scenario in which there is no direct path, that is, there is only an NLOS path. For example, the line of sight identification result may be considered as a measurement quantity of channel measurement, one channel may include one or more paths (for example, a path set), and the line of sight identification result may be an average LOS probability of line of sight identification results corresponding to all paths in a channel, or an LOS or NLOS identification result with the highest occurrence frequency.

(2) Time of arrival TOA estimation result

For example, TOA is a method of calculating a physical distance by using a transmission delay of a radio signal between two nodes. That is, a location is determined by measuring a time interval from sending the signal to receiving the signal, and timing usually needs to be synchronized at a receiving node. For example, the time of arrival estimation result may be considered as a measurement quantity of channel measurement, one channel may include one or more paths (for example, a path set), and the time of arrival estimation result may be an average value of time of arrival estimation results corresponding to all paths in a channel.

(3) Angle of arrival AOA estimation result

For example, a low energy (low energy, LE) device can make a direction of the device available to a peer device by sending a data packet with a direction-finding function by using a single antenna. The peer device includes a radio frequency switch and an antenna array, and switches antennas and obtains IQ samples when receiving a part of data packets. The IQ samples may be used to calculate a phase difference between radio signals received by different elements of the antenna array, which then may be used to estimate an angle of arrival AOA. For example, the angle of arrival estimation result may be considered as a measurement quantity of channel measurement, one channel may include one or more paths (for example, a path set), and the angle of arrival estimation result may be an average value of angle of arrival estimation results corresponding to all paths in a channel.

(4) LOS identification result corresponding to each path in a first path set

For example, the first path set includes one or more paths, the LOS identification result corresponding to each path includes an LOS or an NLOS, and/or an LOS probability, and LOS identification results corresponding to the paths may be the same or different. A quantity of paths is not limited in this application. For example, the first path set includes a path #1, where an LOS identification result of the path #1 may be LOS(1) or NLOS(0), indicating that the path #1 is a direct path, that is, there is no obstacle between a network device and a terminal device, and a signal can be completely transmitted. Optionally, the first path set further includes a path #2, where an LOS identification result of the path #2 may be LOS(0) or NLOS(1), indicating that the path #2 is not a direct path, that is, there is an obstacle between the network device and the terminal device, and a signal cannot be completely transmitted. That is, LOS identification results corresponding to the path #1 and the path #2 are different.

(5) Delay corresponding to each path in a second path set.

For example, the second path set includes one or more paths, and delays corresponding to the paths may be the same or different. A quantity of paths is not limited in this application. For example, the second path set includes a path #3, and a delay of the path #3 is delay#1. Optionally, the second path set may further include a path #4, and a delay of the path #4 is delay#2. delay#1=10 ms and delay#2=8 ms, that is, the delays corresponding to the path #3 and the path #4 are different. Alternatively, delay#1=delay#2=5 ms, that is, the delays corresponding to the path #3 and the path #4 are the same.

(6) Amplitude corresponding to each path in a third path set.

For example, the third path set includes one or more paths, and amplitudes corresponding to the paths may be the same or different. A quantity of paths is not limited in this application. For example, the third path set includes a path #5, and an amplitude of the path #5 is amp1. Optionally, the third path set may further include a path #6, and an amplitude of the path #6 is amp2. For example, amp1=1 and amp2=2, that is, the amplitudes corresponding to the path #5 and the path #6 are different. Alternatively, amp1=amp2=0.5, that is, the amplitudes corresponding to the path #5 and the path #6 are the same.

(7) Phase corresponding to each path in a fourth path set.

For example, the fourth path set includes one or more paths, and phases corresponding to the paths may be the same or different. A quantity of paths is not limited in this application. For example, the fourth path set includes a path #7, and a phase of the path #7 is phase1. Optionally, the fourth path set may further include a path #8, and a phase of the path #8 is phase2. For example, phase1=30° phase2=45°, that is, the phases corresponding to the path #7 and the path #8 are different. Alternatively, phase1=phase2=10°, that is, the phases corresponding to the path #7 and the path #8 are the same.

It should be noted that at least two of the first path set, the second path set, the third path set, and the fourth path set are the same or different. For example, assuming that the first path set and the second path set are the same, for example, both the first path set and the second path set include a path #1, a path #2, a path #3, and a path #4, the channel result obtained by the first device through channel measurement based on a reference signal includes LOS identification results and delays corresponding to the four paths.

For example, the path #1 corresponds to an LOS identification result of LOS(1) and a delay of 2 ms, the path #2 corresponds to an LOS identification result of LOS(1) and a delay of 3 ms, the path #3 corresponds to an LOS identification result of NLOS(1) and a delay of 6 ms, and the path #4 corresponds to an LOS identification result of NLOS(1) and a delay of 4 ms. It can be learned from above that, the path #1 and the path #2 have the same LOS identification result and different delays, and the path #3 and the path #4 have the same LOS identification result and the different delay.

For another example, assuming that the second path set, the third path set, and the fourth path set are the same, for example, the second path set, the third path set, and the fourth path set all include a path #3, a path #4, a path #5, a path #6, a path #7, and a path #8, the channel result obtained by the first device through channel measurement based on a reference signal includes delays, amplitudes, and phases corresponding to the six paths. For example, the path #3 corresponds to a delay of 2 ms, an amplitude of 1, and a phase of 30°, the path #4 corresponds to a delay of 2 ms, an amplitude of 2, and a phase of 20°, the path #5 corresponds to a delay of 5 ms, an amplitude of 1, and a phase of 45°, the path #6 corresponds to a delay of 2 ms, an amplitude of 0, and a phase of 30°, and the path #7 corresponds to a delay of 4 ms, an amplitude of 2, and a phase of 45°, and the path #8 corresponds to a delay of 6 ms, an amplitude of 2, and a phase of 30°. It can be learned from above that the path #3, the path #4, and the path #6 have the same delay, the path #3 and the path #5 have the same amplitude, the path #4, the path #7, and the path #8 have the same amplitude, the path #3, the path #6, and the path #8 have the same phase, the path #5 and the path #7 have the different amplitude, and so on.

In this embodiment of this application, the AI positioning function or the AI positioning model further corresponds to one of the following reporting methods:

(1) A measurement result of each path in a same measurement quantity is reported independently.

For example, that the measurement result of each path in the same measurement quantity is reported independently includes: the measurement result of each path in the same measurement quantity in a same measurement report is reported independently. For example, assuming that there are a path #1, a path #2, a path #3, and a path #4, and the measurement quantity corresponding to the AI positioning function or the AI positioning model indicated by the indication information is a delay corresponding to each path, in a same measurement report, delays corresponding to the path #1, the path #2, the path #3, and the path #4 are reported independently. For example, the delay corresponding to the path #1 is 2 ms, the delay corresponding to the path #2 is 4 ms, the delay corresponding to the path #3 is 6 ms, and the delay corresponding to the path #4 is 5 ms. That is, the measurement report may include the path #1, the path #2, the path #3, and the path #4 and their corresponding delay results, for example, 2 ms, 4 ms, 6 ms, and 5 ms. A quantity of paths is not limited in this application.

Optionally, the measurement result of each path in the same measurement quantity in different measurement reports may also be reported independently.

(2) The measurement result of each path in the same measurement quantity is reported differentially.

For example, that the measurement result of each path in the same measurement quantity is reported differentially includes: the measurement result of each path in the same measurement quantity in a same measurement report is reported differentially. For example, assuming that there are a path #1, a path #2, a path #3, and a path #4, and the measurement quantity corresponding to the AI positioning function or the AI positioning model indicated by the indication information is a delay corresponding to each path, in a same measurement report, delays corresponding to the path #1, the path #2, the path #3, and the path #4 may be reported differentially based on a reference path, and a delay corresponding to the reference path is reported by using an absolute value. For example, a delay corresponding to the path #1 is 2 ms, a delay corresponding to the path #2 is 4 ms, a delay corresponding to the path #3 is 6 ms, and a delay corresponding to the path #4 is 5 ms. In this case, the measurement report may include: the path #1 and the delay delay#1 corresponding to the path #1 being 2 ms, the path #2 and a delay difference $\Delta$1 between the path #2 and the path #1 being 2 ms, the path #3 and a delay difference $\Delta$2 between the path #3 and the path #2 being 2 ms, and the path #4 and a delay difference $\Delta$3 between the path #4 and the path #3 being -1 ms. Then, after receiving the measurement report, the location management function network element may determine, based on delay#1 and $\Delta$1, that the delay delay#2 corresponding to the path #2 is 4 ms, determine, based on delay#2 and $\Delta$2, that the delay delay#3 corresponding to the path #3 is 6 ms, and determine, based on delay#3 and $\Delta$3, that the delay delay#4 corresponding to the path #4 is 5 ms. A quantity of paths is not limited in this application.

It should be understood that the reporting the measurement result differentially can reduce signaling overheads.

Optionally, measurement results of a same measurement quantity in different measurement reports may also be reported differentially. In this way, signaling overheads can be further reduced.

For example, in the uplink positioning scenario, assuming that the measurement quantity corresponding to the AI positioning function or the AI positioning model indicated by the location management function network element is a time of arrival TOA estimation result, the terminal device separately measures two PRSs from the access network device, and reports channel measurement results in different measurement reports. For example, the terminal device performs channel measurement on a PRS #1 from the access network device, and obtains a channel measurement result #1, namely, TOA#1. The terminal device performs channel measurement on a PRS #2 from the access network device, and obtains a channel measurement result #2, namely, TOA#2. In this case, a measurement report #1 carries the measurement result #1, namely, TOA#1, and a measurement report #2 carries $\Delta$TOA. TOA#1+$\Delta$TOA=TOA#2. Then, after receiving the measurement report #1 and the measurement report #2, the location management function network element may further determine, based on TOA#1 and $\Delta$TOA, that a TOA corresponding to the measurement result #2 is TOA#2. In other words, based on the two obtained measurement reports, the location management function network element may explicitly learn of the channel measurement result #1, namely, TOA#1, and implicitly learn of the channel measurement result #2, namely, TOA#2, and the like.

In conclusion, the first device may determine a corresponding measurement quantity and/or a corresponding reporting method based on the AI positioning function or the AI positioning model indicated by the received indication information, and then send a corresponding channel measurement result to the location management function network element in the determined reporting method.

For example, there is a mapping relationship between the AI positioning function or the AI positioning model and the measurement quantity and/or the reporting method corresponding to the channel measurement result. That is, the first device may determine, based on the received indication information and the mapping relationship, the measurement quantity and/or the reporting method corresponding to the channel measurement result, and then send the channel measurement result to the location management function network element. In other words, different indication information indicates different AI positioning functions or AI positioning models, and measurement quantities and/or reporting methods corresponding to corresponding channel measurement results may also be different.

The mapping relationship may be predefined, and the predefinition may include definition performed in advance, for example, definition in a protocol. Alternatively, the mapping relationship is configured or preconfigured. The preconfiguration may be implemented by prestoring corresponding code or a corresponding table in a device or in another manner in which related information may be indicated. A specific implementation of the preconfiguration is not limited in this application.

Optionally, the mapping relationship may exist, for example, is stored or transmitted, in a form of a table, a function, a text, or a character string.

In this embodiment of this application, the AI positioning function or the AI positioning model belongs to a plurality of AI positioning functions or a plurality of AI positioning models, the plurality of AI positioning functions or the plurality of AI positioning models are in one-to-one correspondence with a plurality of different measurement quantity sets, each measurement quantity set includes one or more measurement quantities, and the measurement quantity includes one of a line of sight identification result; a time of arrival estimation result; an angle of arrival estimation result; a line of sight identification result corresponding to each path in a first path set; a delay corresponding to each path in a second path set; an amplitude corresponding to each path in a third path set; and a phase corresponding to each path in a fourth path set. For specific explanations of the measurement quantities, refer to the foregoing related descriptions.

The following uses a form of a table as an example to show the mapping relationship between the AI positioning model or the AI positioning function indicated by the indication information and the measurement quantity/reporting method corresponding to the channel measurement result. The mapping relationship between the measurement quantity corresponding to the channel measurement result and the AI positioning function may satisfy the following Table 1, and the mapping relationship between the reporting method of the channel measurement result and the AI positioning function may satisfy the following Table 2. It should be noted that Table 1 and Table 2 provided in this application are applicable to uplink, downlink, or sidelink positioning scenarios, are merely examples provided for ease of understanding, and do not constitute any limitation on this solution. Optionally, a quantity (for example, a row in the table) of correspondences between AI positioning functions and measurement quantities in Table 1 is not limited in this application. For example, an AI positioning function #1 to an AI positioning function #7 and an AI positioning function #8 to an AI positioning function #33 in Table 1 may be independently formed into new tables. In other words, Table 1 may be split into a plurality of other tables for example. This is not limited in this application, and a splitting manner is not limited, either.

Table 1

| AI positioning function | Measurement quantity |
|---|---|
| AI positioning function #1 | LOS identification result |
| AI positioning function #2 | TOA estimation result |
| AI positioning function #3 | AOA estimation result |
| AI positioning function #4 | LOS identification result corresponding to each path in the first path set |
| AI positioning function #5 | Delay corresponding to each path in the second path set |
| AI positioning function #6 | Amplitude corresponding to each path in the third path set |
| AI positioning function #7 | Phase corresponding to each path in the fourth path set |
| AI positioning function #8 | LOS identification result + TOA estimation result |
| AI positioning function #9 | LOS identification result + AOA estimation result |
| AI positioning function #10 | AOA estimation result + TOA estimation result |
| AI positioning function #11 | LOS identification result + AOA estimation result + TOA estimation result |
| AI positioning function #12 | LOS identification result corresponding to each path in the first path set + Delay corresponding to each path in the first path set |
| AI positioning function #13 | LOS identification result corresponding to each path in the first path set + Amplitude corresponding to each path in the first path set |
| AI positioning function #14 | LOS identification result corresponding to each path in the first path set + Phase corresponding to each path in the first path set |
| AI positioning function #15 | LOS identification result corresponding to each path in the first path set + Delay corresponding to each path in the first path set + Amplitude corresponding to each path in the first path set |
| AI positioning function #16 | LOS identification result corresponding to each path in the first path set + Delay corresponding to each path in the first path set + Phase corresponding to each path in the first path set |
| AI positioning function #17 | LOS identification result corresponding to each path in the first path set + Amplitude corresponding to each path in the first path set + Phase corresponding to each path in the first path set |
| AI positioning function #18 | LOS identification result corresponding to each path in the first path set + Delay corresponding to each path in the first path set + Amplitude corresponding to each path in the first path set + Phase corresponding to each path in the first path set |
| AI positioning function #19 | Delay corresponding to each path in the first path set + Amplitude corresponding to each path in the first path set |

(continued)

| AI positioning function | Measurement quantity |
|---|---|
| AI positioning function #20 | Amplitude corresponding to each path in the first path set + Phase corresponding to each path in the first path set |
| AI positioning function #21 | Delay corresponding to each path in the first path set + Phase corresponding to each path in the first path set |
| AI positioning function #22 | Delay corresponding to each path in the first path set + Amplitude corresponding to each path in the first path set + Phase corresponding to each path in the first path set |
| AI positioning function #23 | LOS identification result corresponding to each path in the first path set + Delay corresponding to each path in the second path set |
| AI positioning function #24 | LOS identification result corresponding to each path in the first path set + Amplitude corresponding to each path in the third path set |
| AI positioning function #25 | LOS identification result corresponding to each path in the first path set + Phase corresponding to each path in the fourth path set |
| AI positioning function #26 | Delay corresponding to each path in the second path set + Amplitude corresponding to each path in the third path set |
| AI positioning function #27 | Delay corresponding to each path in the second path set + Phase corresponding to each path in the fourth path set |
| AI positioning function #28 | Amplitude corresponding to each path in the third path set + Phase corresponding to each path in the fourth path set |
| AI positioning function #29 | LOS identification result corresponding to each path in the first path set + Delay corresponding to each path in the second path set + Amplitude corresponding to each path in the third path set |
| AI positioning function #30 | LOS identification result corresponding to each path in the first path set + Delay corresponding to each path in the second path set + Phase corresponding to each path in the fourth path set |
| AI positioning function #31 | LOS identification result corresponding to each path in the first path set + Amplitude corresponding to each path in the third path set + Phase corresponding to each path in the fourth path set |
| AI positioning function #32 | Delay corresponding to each path in the second path set + Amplitude corresponding to each path in the third path set + Phase corresponding to each path in the fourth path set |
| AI positioning function #33 | LOS identification result corresponding to each path in the first path set + Delay corresponding to each path in the second path set + Amplitude corresponding to each path in the third path set + Phase corresponding to each path in the fourth path set |

In an example, it is assumed that a value "1" of the LOS identification result indicates an LOS, and a value "0" of the LOS identification result indicates an NLOS. If a value of an LOS identification result that corresponds to the AI positioning function #1 and that is obtained by the first device through measurement is 1, it indicates that a measurement result corresponding to the AI positioning function #1 indicates the LOS. If the value of the LOS identification result that corresponds to the AI positioning function #1 and that is obtained through measurement is 0, it indicates that the measurement result corresponding to the AI positioning function #1 indicates the NLOS. It should be understood that the LOS identification result is a parameter that can reflect a channel environment, or is a parameter that can reflect a channel condition. In other words, a change of the channel environment may be reflected in a measurement result of the LOS identification result. For example, the LOS identification result indicates a parameter that can reflect an NLOS degree of a channel.

In an example, it is assumed that a value of a time of arrival TOA estimation result that corresponds to the AI positioning function #2 and that is obtained by the first device through measurement is TOA1. TOA1 may be a specific value, or may be a value range. This is not limited herein.

In an example, it is assumed that a value of an angle of arrival AOA estimation result that corresponds to the AI positioning function #3 and that is obtained by the first device through measurement is AOA1. AOA1 may be a specific value, or may be a value range. This is not limited herein.

In an example, it is assumed that a value "1" of the line of sight LOS identification result indicates an LOS, a value "0" of the line of sight LOS identification result indicates an NLOS, and the first path set includes a path #1 and a path #2. If a value of an LOS identification result of the path #1 in the first path set is 1, and a value of the LOS identification result of the path #2 in the first path set is 0, which correspond to the AI positioning function #4 and are obtained by the first device through measurement, it indicates that a measurement result of the path #1 in the first path set indicates the LOS, a measurement result of the path #2 in the first path set indicates the NLOS. A quantity of paths in the first set is not limited in this application.

In an example, the second path set includes the path #1, the path #2, and a path #3. It is assumed that a delay of the path #1 in the second path set is 4 ms, a delay of the path #2 in the second path set is 3 ms, and a delay of the path #3 in the second path set is 4 ms, which correspond to the AI positioning function #5 and are obtained by the first device through measurement. A quantity of paths in the second set is not limited in this application.

In an example, the third path set includes the path #1 and the path #2. It is assumed that an amplitude of the path #1 in the third path set is amp1, and an amplitude of the path #2 in the third path set is amp2, which correspond to the AI positioning function #6 and are obtained by the first device through measurement. The amplitude corresponding to each path may be a specific value, or may be a value range. This is not limited herein. A quantity of paths in the third set is not limited in this application.

In an example, the fourth path set includes the path #1 and the path #2. It is assumed that a phase of the path #1 in the fourth path set is phase1, and a phase of the path #2 in the fourth path set is phase2, which correspond to the AI positioning function #7 and are obtained by the first device through measurement. The phase corresponding to each path may be a specific value, or may be a value range. This is not limited herein. A quantity of paths in the fourth set is not limited in this application.

It should be understood that the foregoing mapping relationships between the AI positioning function #1 to the AI positioning function #7 and measurement quantities are merely examples for ease of understanding. For specific implementations of other mapping relationships between the AI positioning function #8 to the AI positioning function #33 and measurement quantities, refer to the foregoing related descriptions. For brevity, details are not described herein again.

Optionally, for Table 1, the AI positioning function may correspond to one or more AI positioning models, that is, the measurement quantity corresponding to the channel measurement result corresponds to one or more AI positioning models. The AI positioning function #3 is used as an example. If the AI positioning function #3 includes an AI positioning model #1 and an AI positioning model #2, an angle of arrival AOA estimation result corresponding to the AI positioning model #1 may be AOA11, and an angle of arrival AOA estimation result corresponding to the AI positioning model #2 may be AOA12, which are obtained by the first device through measurement. When the indication information received by the first device indicates the AI positioning function #3, a measurement result reported by the first device may be the angle of arrival AOA estimation result AOA11 corresponding to the AI positioning model #1 included in the AI positioning function #3, and the angle of arrival AOA estimation result AOA12 corresponding to the AI positioning model #2 included in the AI positioning function #3. It should be understood that this implementation is also applicable to other AI positioning functions in Table 1. For brevity, details are not described herein again.

In this embodiment of this application, the AI positioning function further corresponds to one of the following reporting methods: a measurement result of each path in a same measurement quantity is reported independently (referred to as independent reporting for short); or the measurement result of each path in the same measurement quantity is reported differentially (referred to as differential reporting for short). That is, each of the AI positioning functions in Table 1 may correspond to independent reporting or reporting in the differential manner. In this case, an AI positioning function that is in Table 1 and that may correspond to independent reporting and reporting in the differential manner may be replaced with two AI positioning functions, one corresponds to independent reporting, and the other corresponds to reporting in the differential manner. The following uses Table 2 as an example to describe a mapping relationship between each AI positioning function shown in Table 1 and a reporting method. It should be understood that Table 2 is merely an example provided for ease of understanding, and does not constitute any limitation on the technical solutions of this application. For example, a reporting method corresponding to the AI positioning function #1 may be differential reporting, or a reporting method corresponding to the AI positioning function #5 may be independent reporting. This is not limited in this application.

Table 2

| AI positioning function | Reporting method |
|---|---|
| AI positioning function #1 | Independent reporting |
| AI positioning function #2 | Independent reporting |
| AI positioning function #3 | Independent reporting |

(continued)

| AI positioning function | Reporting method |
|---|---|
| AI positioning function #4 | Independent reporting |
| AI positioning function #5 | Differential reporting |
| AI positioning function #6 | Independent reporting |
| AI positioning function #7 | Independent reporting |
| AI positioning function #8 | Independent reporting |
| AI positioning function #9 | Independent reporting |
| AI positioning function #10 | Independent reporting |
| AI positioning function #11 | Independent reporting |
| AI positioning function #12 | Differential reporting |
| AI positioning function #13 | Independent reporting |
| AI positioning function #14 | Independent reporting |
| AI positioning function #15 | Differential reporting |
| AI positioning function #16 | Differential reporting |
| AI positioning function #17 | Independent reporting |
| AI positioning function #18 | Differential reporting |
| AI positioning function #19 | Differential reporting |
| AI positioning function #20 | Differential reporting |
| AI positioning function #21 | Differential reporting |
| AI positioning function #22 | Differential reporting |
| AI positioning function #23 | Differential reporting |
| AI positioning function #24 | Independent reporting |
| AI positioning function #25 | Independent reporting |
| AI positioning function #26 | Differential reporting |
| AI positioning function #27 | Differential reporting |
| AI positioning function #28 | Independent reporting |
| AI positioning function #29 | Differential reporting |
| AI positioning function #30 | Differential reporting |
| AI positioning function #31 | Independent reporting |
| AI positioning function #32 | Differential reporting |
| AI positioning function #33 | Differential reporting |

As shown in Table 2, reporting methods corresponding to the AI positioning function #5, the AI positioning function #12, the AI positioning function #15, the AI positioning function #16, the AI positioning function #18 to the AI positioning function #23, the AI positioning function #26, the AI positioning function #27, the AI positioning function #29, the AI positioning function #30, the AI positioning function #32, and the AI positioning function #33 are differential reporting, and reporting methods corresponding to the AI positioning function #1 to the AI positioning function #4, the AI positioning function #6 to the AI positioning function #11, the AI positioning function #13, the AI positioning function #14, the AI positioning function #17, the AI positioning function #24, the AI positioning function #25, the AI positioning function #28, and the AI positioning function #31 are independent reporting.

Optionally, the reporting method in Table 2 may be explicitly indicated, or may be implicitly indicated. For example, Table 2 may indicate only a mapping relationship between an AI positioning function and the differential reporting method. In this case, after the first device receives the indication information from the location management function network element, if a reporting method corresponding to the AI positioning function indicated by the indication information is empty, it indicates that a measurement result of the measurement quantity corresponding to the AI positioning function is reported to the location management function network element in the independent reporting method.

It should be understood that the mapping relationship between the AI positioning function and the measurement quantity corresponding to the measurement result shown in Table 1 and the mapping relationship between the AI positioning function and the reporting method of the measurement result shown in Table 2 may be implemented independently, or may be implemented in combination. This is not limited in this application. For example, one or more rows in Table 1 and a corresponding reporting method in Table 2 may be indicated in one table. That is, after receiving the indication information from the location management function network element, the first device may learn of both the measurement quantity and the reporting method of the measurement result that correspond to the AI positioning function.

For example, assuming that the indication information sent by the location management function network element indicates the AI positioning function #19, the first device sends, to the location management function network element in the differential reporting method, a measurement result of the delay corresponding to each path in the first path set and a measurement result of the amplitude corresponding to each path in the first path set. For example, the first path set includes a path #1, a path #2, and a path #3. In this case, the first device may perform channel measurement based on a reference signal to obtain delays and amplitudes corresponding to the path #1, the path #2, and the path #3, and the first device may determine that measurement results of the delays and the amplitudes corresponding to the path #1, the path #2, and the path #3 corresponding to the AI positioning function #19 may be reported to the location management function network element differentially. For example, the measurement results reported by the first device include: the delay delay#1 of the path #1 being 4 ms, the path #2 and a delay difference $\Delta1$ between the path #2 and the path #1 being -1 ms, the path #3 and a delay difference $\Delta2$ between the path #3 and the path #2 being 1 ms, the amplitude of the path #1 being amp1, the path #2 and an amplitude difference between the path #2 and the path #1 being $\Delta1'$, and the path #3 and an amplitude difference between the path #3 and the path #2 being $\Delta2'$. Then, after receiving the measurement results, the location management function network element may determine, based on the delay delay#1 of the path #1 and $\Delta1$, that the delay delay#2 of the path #2 is 3 ms, determine, based on the delay delay#2 of the path #2 and $\Delta2$, that the delay delay#3 of the path #3 is 4 ms, determine, based on the amplitude amp1 of the path #1 and $\Delta1'$, that the amplitude of the path #2 is amp2=amp1+$\Delta1'$, and determine, based on the amplitude amp2 of the path #2 and $\Delta2'$, that the amplitude of the path #3 is amp3=amp2+$\Delta2'$. Optionally, the first device may alternatively report the delays and the amplitudes corresponding to the path #1 and the path #3 to the location management function network element differentially by using the delay and the amplitude corresponding to the path #2 as references, provided that it is predefined between the location management function network element and the first device. This is not limited in this application. Implementations of other combinations are similar thereto. For brevity, details are not described herein again.

It should be understood that Table 1 and Table 2 are merely examples provided for ease of understanding, and do not constitute any limitation on the technical solutions of this application.

It should be noted that the foregoing Table 1 and Table 2 respectively describe a mapping relationship between an AI positioning function and a measurement quantity and a mapping relationship between the AI positioning function and a reporting method corresponding to a measurement result. Optionally, a mapping relationship between an AI positioning model and a measurement quantity and a mapping relationship between the AI positioning model and a reporting method corresponding to a measurement result in this embodiment of this application may also be indicated in the form of a table. For specific implementations, refer to Table 1 and Table 2. For example, the AI positioning functions in Table 1 and Table 2 may be replaced with AI positioning models, to describe mapping relationships between an AI positioning model #1 to an AI positioning model #33 and measurement quantities and mapping relationships between the AI positioning model #1 to the AI positioning model #33 and reporting methods corresponding to measurement results.

Optionally, the mapping relationship between the AI positioning model and the reporting method may be explicitly indicated, or may be implicitly indicated. For example, only a mapping relationship between an AI positioning model and the differential reporting method may be indicated. In this case, after the first device receives the indication information from the location management function network element, if a reporting method corresponding to the AI positioning model indicated by the indication information is empty, it indicates that a measurement result of the measurement quantity corresponding to the AI positioning model is reported to the location management function network element in the independent reporting method.

It should be understood that the mapping relationship between the AI positioning model and the measurement quantity corresponding to the measurement result and the mapping relationship between the AI positioning model and the reporting method of the measurement result may be implemented independently, or may be implemented in combination. This is not limited in this application. For example, a mapping relationship between an AI positioning model, a measurement quantity corresponding to a measurement result, and a reporting method of the measurement result may be indicated in one table. That is, after receiving the indication information from the location management function network element, the first device may learn of both the measurement quantity and the reporting method of the measurement result that correspond to the AI positioning model.

For example, assuming that the indication information sent by the location management function network element indicates the AI positioning function #21, the first device sends, to the location management function network element in the differential reporting method, a measurement result of the delay corresponding to each path in the first path set and a measurement result of the phase corresponding to each path in the first path set. For example, the first path set includes a path #1 and a path #2. In this case, the first device may perform channel measurement based on a reference signal to obtain delays and phases corresponding to the path #1 and the path #2, and the first device may determine that measurement results of the delays and the phases corresponding to the path #1 and the path #2 corresponding to the AI positioning function #21 may be reported to the location management function network element differentially. For example, the measurement results reported by the first device include: the delay delay#1 of the path #1 being 4 ms, the path #2 and a delay difference $\Delta$1 between the path #2 and the path #1 being -1 ms, the phase of the path #1 being phase1, and the path #2 and a phase difference between the path #2 and the path #1 being $\Delta$1'. Then, after receiving the measurement results, the location management function network element may determine, based on the delay delay#1 of the path #1 and $\Delta$1, that the delay delay#2 of the path #2 is 3 ms, and determine, based on the phase phase1 of the path #1 and $\Delta$1', that the phase of the path #2 is phase2=phase1+$\Delta$1'. Optionally, the first device may alternatively report the delay and the phase corresponding to the path #1 to the location management function network element differentially by using the delay and the phase corresponding to the path #2 as references, provided that it is predefined between the location management function network element and the first device. This is not limited in this application. Implementations of other combinations are similar thereto. For brevity, details are not described herein again.

Optionally, the first device may further determine, based on the indication information, a monitoring policy of the AI positioning function or the AI positioning model, an update policy of the AI positioning function or the AI positioning model, or the like.

For example, the monitoring policy of the AI positioning function or the AI positioning model includes at least one of the following:

(1) Monitoring based on data distribution of a measurement result of a measurement quantity correspondingly input into the AI positioning function/model. For example, monitoring is performed based on a signal to interference plus noise ratio (signal to interference plus noise ratio, SINR) of the channel measurement result. When the SINR satisfies a first condition, a current monitoring criterion is met, and no operation needs to be performed on the AI positioning function/model; otherwise, an operation needs to be performed on the AI positioning function/model. The first condition includes: the SINR is greater than or equal to a first threshold and is less than or equal to a second threshold, or the SINR is greater than the first threshold and is less than the second threshold, or the SINR is greater than or equal to the first threshold and is less than the second threshold, or the SINR is greater than the first threshold and is less than or equal to the second threshold.

(2) Monitoring based on data distribution of a result correspondingly output by the AI positioning function/model. For example, monitoring is performed based on a location result output by an AI direct positioning function/model. For a same AI direct positioning function/model, if two adjacent output location results satisfy a second condition, an operation needs to be performed on the AI positioning function/model; otherwise, no operation needs to be performed on the AI positioning function/model. That the two adjacent output location results satisfy the second condition includes: a difference between the two adjacent output location results is greater than a third threshold, or the difference between the two adjacent output location results is greater than or equal to the third threshold.

(3) Monitoring based on a correct value of a result correspondingly output by the AI positioning function/model. For example, monitoring is performed based on a location result output by an AI direct positioning function/model. For a same AI direct positioning function/model, for first input whose output is known, that is, first input corresponding to an existing output tag or ground truth, if an output location result satisfies a third condition, an operation needs to be performed on the AI positioning function/model; otherwise, no operation needs to be performed on the AI positioning function/model. That the output location result satisfies the third condition includes: a difference between the output location result and a correct value, that is, the ground truth, of the output location result is greater than a third threshold, or the difference between the output location result and the ground truth is greater than or equal to the third threshold.

The operation performed on the AI positioning function/model includes one or more of switching, updating, or deactivating.

For example, the update policy of the AI positioning function or the AI positioning model includes at least one of the following:

(1) Update all parameters of the AI positioning function or the AI positioning model.
(2) Update a part of parameters of the AI positioning function or the AI positioning model.
(3) Switch to a specified AI positioning function or AI positioning model.

Based on the monitoring policy and the update policy of the AI positioning function or the AI positioning model, the first device may monitor and update the AI positioning function or the AI positioning model in time, so that a more accurate location of the terminal device can be obtained, thereby effectively managing the terminal device.

In conclusion, the correspondence between the measurement quantity corresponding to the channel measurement result and the AI positioning function or the AI positioning model indicated by the indication information is defined, and the correspondence between the AI positioning function or the AI positioning model and the reporting method of the measurement result is defined, so that after receiving the indication information, the first device may determine the channel measurement result expected by the location management function network element, and report the measurement result to the location management function network element in the corresponding reporting method. Therefore, signaling overheads can be reduced.

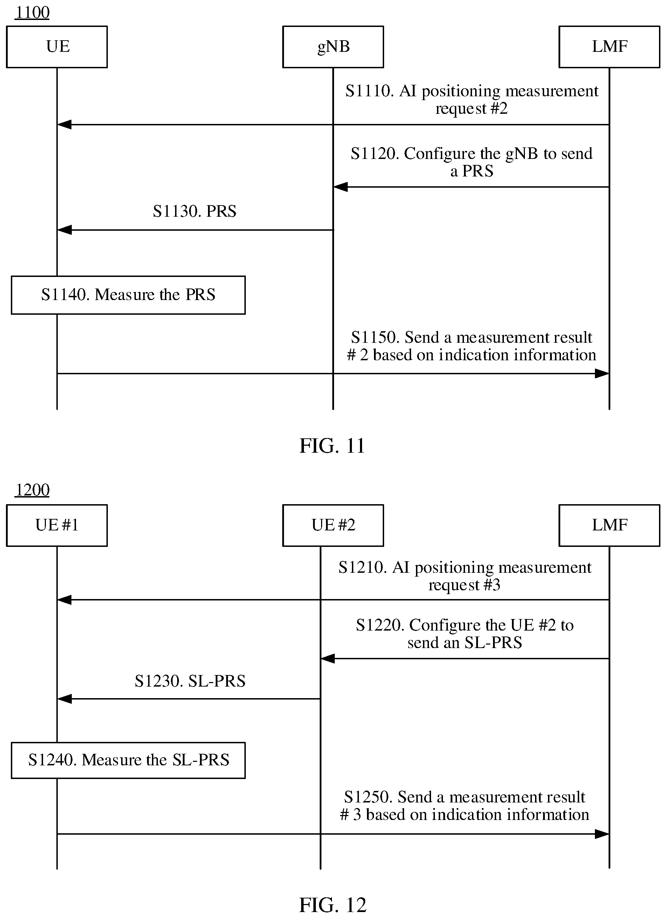

The following describes application of embodiments of this application to an uplink positioning scenario, a downlink positioning scenario, and a sidelink positioning scenario with reference to FIG. 10 to FIG. 12 by using examples. It should be understood that the method embodiments shown in FIG. 9 to FIG. 12 may be combined with each other, and steps in the method embodiments shown in FIG. 9 to FIG. 12 may be referenced with each other. For example, in embodiments of this application, the method embodiments shown in FIG. 10 to FIG. 12 may be considered as possible implementations of implementing functions in the method embodiment shown in FIG. 9. FIG. 10 mainly describes the uplink positioning scenario, FIG. 11 mainly describes the downlink positioning scenario, and FIG. 12 mainly describes the sidelink positioning scenario.

FIG. 10 is a schematic flowchart of a communication method 1000 according to an embodiment of this application. As shown in FIG. 10, for example, an LMF is a location management function network element, a first device is a gNB, and a second device is a UE. Model selection/inference in this implementation occurs on an LMF side. A corresponding channel measurement result obtained by the gNB by measuring an SRS sent by the UE is used as input of an AI positioning model, which outputs a location of the UE. It should be understood that related descriptions in the embodiment shown in FIG. 9 are also applicable to this implementation. A same or similar technical means may exist between FIG. 9 and FIG. 10. Content in FIG. 10 that has been described in the embodiment in FIG. 9 is not described in detail again.

S1010. The LMF sends an AI positioning measurement request #1 (that is, an example of the measurement request message) to the gNB. Correspondingly, the gNB receives the AI positioning measurement request #1 from the LMF. The AI positioning measurement request #1 carries indication information, and the indication information indicates an AI positioning function or an AI positioning model.

For example, the LMF sends the AI positioning measurement request #1 to the gNB by using NRPPa signaling, to request the gNB to report an SRS measurement result.

Optionally, the indication information may not be carried in the AI positioning measurement request #1, that is, the AI positioning measurement request #1 and the indication information may be carried in different messages, and the two may be sent simultaneously or separately.

S1020. The gNB configures, based on the AI positioning measurement request #1, the UE to send an SRS.

S1030. The UE sends the SRS to the gNB. Correspondingly, the gNB receives the SRS from the UE.

S1040. The gNB measures the SRS to obtain a measurement result #1 (that is, an example of the channel measurement result).

S1050. The gNB sends the measurement result #1 to the LMF based on the indication information.

For a specific implementation in which the gNB sends the measurement result #1 to the LMF based on the indication information, refer to related descriptions of the method 900. The AI positioning function or the AI positioning model indicated by the indication information corresponds to a measurement quantity corresponding to the channel measurement result. In addition, the AI positioning function or the AI positioning model indicated by the indication information further corresponds to a reporting method. For specific content and explanations of the measurement quantity and the reporting method, refer to related descriptions of the method 900. For example, if the indication information indicates the AI positioning function #5 shown in Table 1, it can be learned from Table 2 that the reporting method corresponding to the AI positioning function #5 is differential reporting. Then, the gNB configures the UE to send the SRS, measures the SRS from the UE to obtain the corresponding measurement result #1, and reports the measurement result #1 to the LMF. Assuming that the second path set includes a path #1, a path #2, and a path #3, the measurement result #1 includes: a delay delay#1 corresponding to the path #1 being 4 ms, the path #2 and a delay difference $\Delta 1$ between the path #2 and the path #1 being - 1 ms, and the path #3 and a delay difference $\Delta 2$ between the path #3 and the path #2 being 1 ms. Then, after receiving the measurement result #1, the location management function network element may determine, based on delay#1 and $\Delta 1$, that a delay delay#2 corresponding to the path #2 is 3 ms, and determine, based on delay#2 and $\Delta 2$, that a delay delay#3 corresponding to the path #3 is 4 ms. Optionally, the first device may alternatively report the delays corresponding to the path #1 and the path #3 differentially by using the delay corresponding to the path #2 as a reference, provided that it is predefined between the location management function network element and the first device.

Optionally, the method may further include step S1060 (not shown in the figure).

S1060. The LMF selects an AI positioning model based on the measurement result #1, and performs AI positioning. For example, the measurement result #1 is used as input of the AI positioning model, which outputs the location of the UE. The AI positioning model may be deployed on the LMF side. Alternatively, the UE/base station may extract a feature of a channel response by using the AI positioning model, and the LMF uses the extracted feature as input of the AI positioning model, to obtain the location of the UE.

For example, the UE sends the uplink SRS to the base station, and the gNB obtains a channel response. For example, the AI positioning model is deployed on the LMF side, the gNB sends the channel response to the LMF, and the LMF uses channel responses of a plurality of gNBs as input of the AI positioning model, to output location information of the UE. Assuming that a gNB has 16 antennas and 4096 subcarriers, each gNB needs to send 16*4096 pieces of complex information to the LMF. For another example, the AI positioning model is deployed on a gNB side and the LMF side. Each gNB uses a channel response as input. The AI positioning model on the gNB side extracts a channel response feature and sends the channel response feature to the LMF. The LMF uses the received channel response feature as input and uses the AI positioning model on the LMF side to obtain the UE location. For example, the channel response feature may be a corresponding noise signal when signal power is weak, or may be a corresponding signal multipath response when signal power is strong, including one or more of a quantity of paths, amplitude, phase, or angle information of each path, and the like. A dimension of the channel response feature is determined by an output dimension of the AI positioning model on the gNB side. For example, the gNB may extract a channel response feature in a dimension of [128] from a channel response in a dimension of [16, 4096], and send the channel response feature to the LMF.

It should be noted that, in this embodiment of this application, information/or data transmission between devices is not limited to direct transmission, indirect transmission (including transparent transmission), or the like. Therefore, that a device A sends information to a device B includes that the device A directly sends the information to the device B by using an interface between the device A and the device B, and may also include that the device A sends the message to a device C, and the device C sends the message to the device B. In addition, how many relays are used for forwarding from the device A to the device B is not limited, either. For example, that the UE sends the measurement result #1 to the LMF may include a plurality of implementations, for example, the UE directly sends the measurement result #1 to the LMF by using an LPP message; or the UE sends the measurement result #1 to the LMF via the gNB; or the UE sends the measurement result #1 to the LMF via the gNB and an AMF; or the UE sends the measurement result #1 to the LMF via the AMF. This is not limited. Interaction between other devices is similar thereto, which may be understood by a person skilled in the art. Details are not described again. For details about interface messages between devices, refer to descriptions in FIG. 4.

In this embodiment of this application, the LMF selects an adaptive AI positioning model based on the measurement result #1. It may be understood that if an AI positioning model uses delays, amplitudes, and phases of a plurality of paths included in the measurement result #1 as input, the AI positioning model may be selected for positioning inference. For example, if payload of a channel measurement report includes information about 32 paths, and in a model library of the LMF, an AI positioning model A uses information about 256 paths as input, and an AI positioning model B uses information of 32 paths as input, the LMF selects the AI positioning model B for positioning inference.

In this embodiment of this application, the reference signal measurement node gNB learns of, through parsing based on the AI positioning function indicated by the LMF, the measurement result #1 required by the LMF, and reports the measurement result #1, so that the LMF uses the measurement result #1 as input of the AI positioning model, to obtain the location of the UE as output of the AI positioning model. In this way, AI positioning is implemented, and signaling overheads caused by separately indicating a reporting method and an AI positioning function are reduced.

FIG. 11 is a schematic flowchart of a communication method 1100 according to an embodiment of this application. As shown in FIG. 11, for example, an LMF is a location management function network element, a first device is a UE, and a second device is a gNB. Model selection/inference in this implementation occurs on an LMF side. A corresponding channel measurement result obtained by the UE by measuring a PRS sent by the gNB is used as input of an AI positioning model, which outputs a location of the UE. It should be understood that related descriptions in the embodiment shown in FIG. 9 are also applicable to this implementation. A same or similar technical means may exist between FIG. 9 and FIG. 11. Content in FIG. 11 that has been described in the embodiment in FIG. 9 is not described in detail again.

S1110. The LMF sends an AI positioning measurement request #2 (that is, an example of the measurement request message) to the UE. Correspondingly, the UE receives the AI positioning measurement request #2 from the LMF. The AI positioning measurement request #2 carries indication information, and the indication information indicates an AI positioning function or an AI positioning model.

For example, the LMF sends an AI positioning measurement request #2 to the UE by using LPP signaling, to request the UE to report a PRS measurement result.

Optionally, the indication information may not be carried in the AI positioning measurement request #2, that is, the AI positioning measurement request #2 and the indication information may be carried in different messages, and the two may be sent simultaneously or separately.

S1120. The LMF configures the gNB to send a PRS.

S1130. The gNB sends the PRS to the UE based on the configuration of the LMF. Correspondingly, the UE receives the PRS from the gNB.

S1140. The UE measures the PRS from the gNB to obtain a measurement result #2 (that is, an example of the channel measurement result).

S1150. The UE sends the measurement result #2 to the LMF based on the indication information.

For a specific implementation in which the UE sends the measurement result #2 to the LMF based on the indication information, refer to related descriptions of the method 900. The AI positioning function or the AI positioning model indicated by the indication information corresponds to a measurement quantity corresponding to the channel measurement result. In addition, the AI positioning function or the AI positioning model indicated by the indication information further corresponds to a reporting method. For specific content and explanations of the measurement quantity and the reporting method, refer to related descriptions of the method 900. For brevity, details are not described herein again.

Optionally, the method may further include step S 1160 (not shown in the figure).

S1160. The LMF selects an AI positioning model based on the measurement result #2, and performs AI positioning. For example, the measurement result #2 is used as input of the AI positioning model, which outputs the location of the UE. The AI positioning model may be deployed on the LMF side. Alternatively, the UE/base station may extract a feature of a channel response by using the AI positioning model, and the LMF uses the extracted feature as input of the AI positioning model, to obtain the location of the UE.

For example, the gNB sends the downlink PRS to the UE, and the UE obtains a channel response, and sends, to the LMF, the channel response or a feature extracted by the AI positioning model from the channel response. A feature based on the channel response may be the channel response, or may be the feature extracted by the AI positioning model from the channel response.

In this embodiment of this application, the reference signal measurement node gNB learns of, through parsing based on the AI positioning function indicated by the LMF, the measurement result #1 required by the LMF, and reports the measurement result #1, so that the LMF uses the measurement result #1 as input of the AI positioning model, to obtain the location of the UE as output of the AI positioning model. In this way, AI positioning is implemented, and signaling overheads can be reduced.

FIG. 12 is a schematic flowchart of a communication method 1200 according to an embodiment of this application. As shown in FIG. 12, for example, an LMF is a location management function network element, a first device is a UE #1, and a second device is a UE #2. Model selection/inference in this implementation occurs on an LMF side. A corresponding channel measurement result obtained by the UE #1 by measuring an SL-PRS sent by the UE #2 is used as input of an AI positioning model, which outputs a location of the UE#1. It should be understood that related descriptions in the embodiment shown in FIG. 9 are also applicable to this implementation. A same or similar technical means may exist in FIG. 9 to FIG. 12. Content in FIG. 12 that has been described in the embodiment in FIG. 9 to FIG. 11 is not described in detail again.

S1210. The LMF sends an AI positioning measurement request #3 (that is, an example of the measurement request message) to the UE #1. Correspondingly, the UE #1 receives the AI positioning measurement request #3 from the LMF. The AI positioning measurement request #3 carries indication information, and the indication information indicates an AI positioning function or an AI positioning model.

For example, the LMF sends an AI positioning measurement request #3 to the UE#1 by using LPP signaling, to request the UE #1 to report an SL-PRS measurement result.

Optionally, the indication information may not be carried in the AI positioning measurement request #3, that is, the AI positioning measurement request #3 and the indication information may be carried in different messages, and the two may be sent simultaneously or separately.

S1220. The LMF configures the UE #2 to send a PRS.

S1230. The UE #2 sends the SL-PRS to the UE #1 based on the configuration of the LMF. Correspondingly, the UE #1 receives the SL-PRS from the UE #2.

S1240. The UE #1 measures the SL-PRS from the UE #2, to obtain a measurement result #3 (that is, an example of the channel measurement result).

S1250. The UE #1 sends the measurement result #3 to the LMF based on the indication information.

For a specific implementation in which the UE #1 sends the measurement result #3 to the LMF based on the indication information, refer to related descriptions of the method 900. The AI positioning function or the AI positioning model indicated by the indication information corresponds to a measurement quantity corresponding to the channel measurement result. In addition, the AI positioning function or the AI positioning model indicated by the indication information further corresponds to a reporting method. For specific content and explanations of the measurement quantity and the reporting method, refer to related descriptions of the method 900. For brevity, details are not described herein again.

Optionally, the method may further include step S1260 (not shown in the figure).

S1260. The LMF selects an AI positioning model based on the measurement result #3, and performs AI positioning. For example, the measurement result #3 is used as input of the AI positioning model, which outputs the location of the UE. The AI positioning model may be deployed on the LMF side. Alternatively, the UE #1/UE #2 may extract a feature of a channel response by using the AI positioning model, and the LMF uses the extracted feature as input of the AI positioning model, to obtain the location of the UE.

For example, the UE #2 sends the sidelink SL-PRS to the UE #1, and the UE #1 obtains a channel response, and sends, to the LMF, the channel response or a feature extracted by the AI positioning model from the channel response. A feature based on the channel response may be the channel response, or may be the feature extracted by the AI positioning model from the channel response.

In this embodiment of this application, the reference signal measurement node gNB learns of, through parsing based on the AI positioning function indicated by the LMF, the measurement result #1 required by the LMF, and reports the measurement result #1, so that the LMF uses the measurement result #1 as input of the AI positioning model, to obtain the location of the UE as output of the AI positioning model. In this way, AI positioning is implemented, and signaling overheads can be reduced.

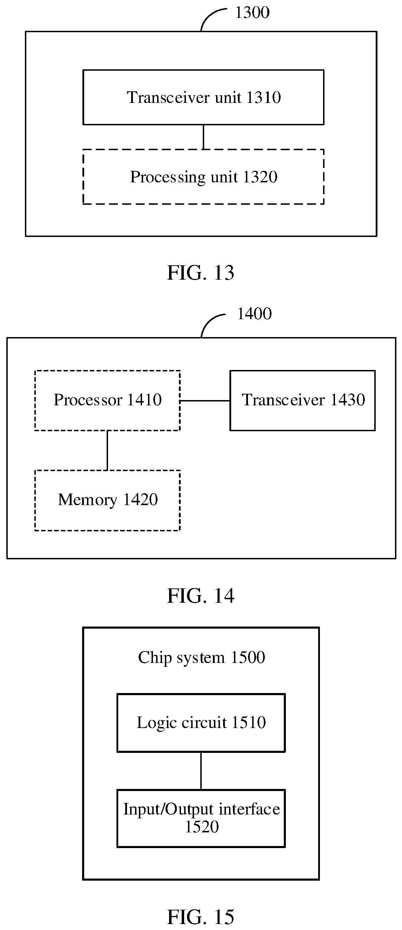

The method provided in embodiments of this application is described above in detail with reference to FIG. 1 to FIG. 12. The apparatus provided in embodiments of this application is described below in detail with reference to FIG. 13 to FIG. 15. It should be understood that descriptions of apparatus embodiments correspond to descriptions of method embodiments. Therefore, for content that is not described in detail, refer to the foregoing method embodiments. For brevity, details are not described herein again.

FIG. 13 is a diagram of a communication apparatus 1300 according to an embodiment of this application. The apparatus 1300 includes a transceiver unit 1310, and optionally, further includes a processing unit 1320. The transceiver unit 1310 may be configured to implement a corresponding communication function. The transceiver unit 1310 may also be referred to as a communication interface or a communication unit. The processing unit 1320 may be configured to perform processing.

Optionally, the apparatus 1300 may further include a storage unit. The storage unit may be configured to store instructions and/or data. The processing unit 1320 may read the instructions and/or the data in the storage unit, to enable the apparatus to implement the foregoing method embodiments.

For example, the communication apparatus 1300 may be a first device, or may be a communication apparatus that is used in the first device or used in combination with the first device and that can implement a method performed by the first device, for example, a chip, a chip system, or a circuit. For details, refer to related descriptions of a chip system shown in FIG. 15.

For example, the communication apparatus 1300 may be a location management function network element, or may be a communication apparatus that is used in the location management function network element or used in combination with the location management function network element and that can implement a method performed by the location management function network element, for example, a chip, a chip system, or a circuit. For details, refer to related descriptions of the chip system shown in FIG. 15. For example, the location management function network element may be the LMF in the foregoing method embodiments.

In a design, the apparatus 1300 is configured to perform steps or procedures performed by the first device in the method embodiments in FIG. 9 to FIG. 12, the transceiver unit 1310 is configured to perform receiving/sending-related operations on the first device side in the foregoing method embodiments, and the processing unit 1320 is configured to perform processing-related operations on the first device side in the method embodiments in FIG. 9 to FIG. 12.

In another design, the apparatus 1300 is configured to perform steps or procedures performed by the location management function network element in the method embodiments in FIG. 9 to FIG. 12, the transceiver unit 1310 is configured to perform sending/receiving-related operations on the location management function network element side in the foregoing method embodiments, and the processing unit 1320 is configured to perform processing-related operations on the location management function network element side in the method embodiments in FIG. 9 to FIG. 12.

It should be understood that a specific process in which the units perform the foregoing corresponding steps is described in detail in the foregoing method embodiments. For brevity, details are not described herein.

It should be further understood that the apparatus 1300 herein is embodied in a form of functional units. The term "unit" herein may refer to an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1300 may be specifically a network element (for example, the first device or the location management function network element) in the foregoing embodiments, and may be configured to perform procedures and/or steps corresponding to the network element in the foregoing method embodiments. To avoid repetition, details are not described herein again.

The apparatus 1300 in the foregoing solutions has a function of implementing corresponding steps performed by a network element (for example, the first device or the location management function network element) in the foregoing method. The function may be implemented by hardware, or may be implemented by hardware executing corresponding software. The hardware or the software includes one or more modules corresponding to the function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform a receiving/sending operation and a related processing operation in the method embodiments.

In addition, the transceiver unit 1310 may alternatively be a transceiver circuit (for example, may include a receiving circuit and a sending circuit), and the processing unit may be a processing circuit.

It should be noted that the apparatus in FIG. 13 may be the network element in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 14 is a diagram of another communication apparatus 1400 according to an embodiment of this application. As shown in FIG. 14, the apparatus 1400 includes a transceiver 1430. The transceiver 1430 is configured to receive and/or send a signal. For example, a processor 1410 is configured to control the transceiver 1430 to receive and/or send the signal.

Optionally, the apparatus 1400 further includes the processor 1410 and a memory 1420. The processor 1410 is coupled to the memory 1420. The memory 1420 is configured to store a computer program or instructions and/or data. The processor 1410 is configured to execute the computer program or the instructions stored in the memory 1420, or read the data stored in the memory 1420, to perform the methods in the foregoing method embodiments. For example, the processor 1410 is configured to control the transceiver 1430 to receive and/or send the signal.

Optionally, there are one or more processors 1410.

Optionally, there are one or more memories 1420.

Optionally, the memory 1420 and the processor 1410 are integrated together or disposed separately.

For example, the processor 1410 may have a function of the processing unit 1320 shown in FIG. 13, the memory 1420 may have a function of the storage unit, and the transceiver 1430 may have a function of the transceiver unit 1310 shown in FIG. 13.

For example, the communication apparatus 1400 may be a first device, or may be a communication apparatus that is used in the first device or used in combination with the first device and that can implement a method performed by the first device, for example, a chip, a chip system, or a circuit. For details, refer to related descriptions of the chip system shown in FIG. 15.

For example, the communication apparatus 1400 may be a location management function network element, or may be a communication apparatus that is used in the location management function network element or used in combination with the location management function network element and that can implement a method performed by the location management function network element, for example, a chip, a chip system, or a circuit. For details, refer to related descriptions of the chip system shown in FIG. 15. For example, the location management function network element may be the LMF in the foregoing method embodiments.

In a design, the apparatus 1400 is configured to perform steps or procedures performed by the first device in the method embodiments in FIG. 9 to FIG. 12, the transceiver 1430 is configured to perform receiving/sending-related operations on the first device side in the foregoing method embodiments, and the processor 1410 is configured to perform processing-related operations on the first device side in the method embodiments in FIG. 9 to FIG. 12.

In another design, the apparatus 1400 is configured to perform steps or procedures performed by the location management function network element in the method embodiments in FIG. 9 to FIG. 12, the transceiver 1430 is configured to perform sending/receiving-related operations on the location management function network element side in the foregoing method embodiments, and the processor 1410 is configured to perform processing-related operations on the location management function network element side in the method embodiments in FIG. 9 to FIG. 12.

Optionally, the processor 1410 is configured to execute the computer program or the instructions stored in the memory 1420, to implement related operations of a network element (for example, the first device or the location management function network element) in the foregoing method embodiments.

It should be understood that the processor mentioned in this embodiment of this application may be the following device or a part of circuits configured for a processing function in the following device: a central processing unit (central processing unit, CPU) or another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. For example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include but is not limited to these and any other appropriate type of memory.

In embodiments of this application, the methods in FIG. 9 to FIG. 12 may be performed by the first device and the location management function network element, or may be performed by chips, chip systems, or circuits of the first device and the location management function network element. The chips, the chip systems, or the circuits may be installed in the first device and the location management function network element. The following describes the chip systems in the first device and the location management function network element with reference to FIG. 15.

FIG. 15 is a diagram of a chip system 1500 according to an embodiment of this application. The chip system 1500 (or may be referred to as a processing system) includes a logic circuit 1510 and an input/output interface (input/output interface) 1520.

The logic circuit 1510 may be a processing circuit in the chip system 1500. The logic circuit 1510 may be coupled and connected to a storage unit, and invoke instructions in the storage unit, to enable the chip system 1500 to implement the methods and functions in embodiments of this application. The input/output interface 1520 may be an input/output circuit in the chip system 1500, and outputs information processed by the chip system 1500, or inputs to-be-processed data or signaling information to the chip system 1500 for processing.

For example, if the chip system 1500 is installed in the first device, the logic circuit 1510 is coupled to the input/output interface 1520, and the input/output interface 1520 may input a reference signal to the logic circuit 1510 for processing, for example, performing channel measurement on the reference signal to obtain a measurement result.

For another example, if the chip system 1500 is installed in the location management function network element, the logic circuit 1510 is coupled to the input/output interface 1520, and the input/output interface 1520 may input a measurement result from the first device to the logic circuit 1510 for processing.

In a solution, the chip system 1500 is configured to implement operations performed by a device (for example, the first device, the positioning device, or the location management function network element) in the foregoing method embodiments.

For example, the logic circuit 1510 is configured to implement processing-related operations performed by the device (the first device, the positioning device, or the location management function network element) in the foregoing method embodiments, and the input/output interface 1520 is configured to implement sending and/or receiving-related operations performed by the network element (the first device, the positioning device, or the location management function network element) in the foregoing method embodiments.

An embodiment of this application provides a computer-readable storage medium. The computer-readable storage medium stores computer instructions for implementing the method performed by the device (for example, the first device, the positioning device, or the location management function network element) in the foregoing method embodiments.

For example, when the computer program is executed by a computer, the computer is enabled to implement the method performed by the device (for example, the first device, the positioning device, for example, the location management function network element) in the foregoing method embodiments.

An embodiment of this application provides a computer program product, including instructions. When the instructions are performed by a computer, the method performed by the device (for example, the first device, the positioning device, for example, the location management function network element) in the foregoing method embodiments is implemented.

An embodiment of this application provides a communication system. The communication system includes the first device and/or the location management function network element in the foregoing embodiments. For example, the system includes the first device and/or the location management function network element in the embodiments shown in FIG. 9 to FIG. 11. For another example, the system includes the first device and/or the location management function network element in the embodiments shown in FIG. 9 to FIG. 11.

For explanations and beneficial effects of related content in any one of the apparatuses provided above, refer to the corresponding method embodiment provided above. Details are not described herein again.

For ease of understanding the foregoing embodiments provided in this application, the following several points are described:

In this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, "a plurality of" means two or more, and "and/or" describes an association relationship between associated objects, and indicates that three relationships may exist. For example, A and/or B may indicate the following cases: only A exists, both A and B exist, and only B exists. A and B may be singular or plural. In text descriptions of this application, the character "/" generally indicates an "or" relationship between the associated objects, and "at least one of the following items (pieces)" or a similar expression thereof means any combination of these items, including any combination of singular items (pieces) or plural items (pieces). For example, at least one item (piece) of a, b, and c may indicate a, b, c, a and b, a and c, b and c, or a, b, and c. Each of a, b, and c may be singular or plural.

In this application, "first", "second", and various numbers are used for differentiation for ease of description, rather than limiting the scope of embodiments of this application, for example, are used to distinguish between different messages rather than describe a specific order or sequence. It should be understood that objects described in such a way are interchangeable in an appropriate circumstance, so that a solution other than embodiments of this application can be described.

In this application, the terms "include" and "have" and any other variants thereof mean to cover the non-exclusive inclusion, for example, a process, method, system, product, or device that includes a list of steps or units is not necessarily limited to those steps or units expressly listed, but may include other steps or units not expressly listed or inherent to such a process, method, product, or device.

In this application, "indicate" may include "directly indicate" and "indirectly indicate". When a piece of indication information is described as indicating A, the indication information may directly indicate A or indirectly indicate A, and it does not represent that the indication information definitely carries A. The directly indicating the information A means including the information A. The implicitly indicating the information A means indicating the information A based on a correspondence between the information A and information B by directly indicating the information B. The correspondence between the information A and the information B may be predefined, prestored, pre-burned, or preconfigured.

It may be understood that some optional features in embodiments of this application may be independent of other features in some scenarios, or may be combined with other features in some scenarios. This is not limited.

It may be further understood that, in some of the foregoing embodiments, information sending is mentioned a plurality of times. For example, "a network element A sends information A to a network element B" may be understood as that a destination end of the information A or an intermediate network element in a transmission path to the destination end is the network element B, and may include directly or indirectly sending the information to the network element B; and "the network element B receives the information A from the network element A" may be understood as that a source end of the information A or an intermediate network element in a transmission path to the source end is the network element A, and may include directly or indirectly receiving the information from the network element A. Necessary processing, for example, a format change, may be performed on the information between the source end and the destination end between which the information is sent, but the destination end can understand valid information from the source end. Similar descriptions in this application may be understood similarly, and details are not described herein.

It may be further understood that in some of the foregoing embodiments, an example in which an AI model is an AI model used for positioning is mainly used for description. It may be understood that the AI model may also be used for another purpose.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, methods and operations implemented by the first device or the positioning device may alternatively be implemented by a component (for example, a chip or a circuit) of the first device or the positioning device. This is not limited.

A person of ordinary skill in the art may be aware that, with reference to units and algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes various media that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, performed by a first device or a chip or a circuit of the first device, wherein the method comprises:

   receiving indication information from a location management function network element, wherein the indication information indicates an artificial intelligence AI positioning function or an AI positioning model, the AI positioning function or the AI positioning model belongs to a plurality of AI positioning functions or AI positioning models, the plurality of AI positioning functions or AI positioning models correspond to a plurality of different measurement quantity sets, and the measurement quantity set comprises one or more measurement quantities; and
   sending a channel measurement result to the location management function network element based on the indication information, wherein a measurement quantity corresponding to the channel measurement result corresponds to the AI positioning function or the AI positioning model indicated by the indication information.

2. The method according to claim 1, wherein the indication information is carried in a measurement request message from the location management function network element.

3. The method according to claim 1 or 2, wherein the AI positioning function or the AI positioning model corresponds to one or more of the following measurement quantities:

   a line of sight LOS identification result;
   a time of arrival TOA estimation result;
   an angle of arrival AOA estimation result;
   an LOS identification result corresponding to each path in a first path set;
   a delay corresponding to each path in a second path set;
   an amplitude corresponding to each path in a third path set; or
   a phase corresponding to each path in a fourth path set, wherein
   at least two of the first path set, the second path set, the third path set, and the fourth path set are the same or different.

**4.** The method according to any one of claims 1 to 3, wherein

the first device is an access network device, the channel measurement result is obtained based on first channel measurement, and the first channel measurement comprises measuring a sounding reference signal from a terminal device; or
the first device is a terminal device, the channel measurement result is obtained based on second channel measurement, and the second channel measurement comprises measuring a positioning reference signal or a channel state information reference signal from an access network device; or
the first device is a first terminal device, the channel measurement result is obtained based on third channel measurement, and the third channel measurement comprises measuring a sidelink positioning reference signal from a second terminal device.

**5.** The method according to any one of claims 1 to 4, wherein the AI positioning function or the AI positioning model further corresponds to one of the following reporting methods:

a measurement result of each path in a same measurement quantity is reported independently; or
the measurement result of each path in the same measurement quantity is reported differentially.

**6.** The method according to claim 5, wherein the channel measurement result is comprised in a measurement report, and that the measurement result of each path in the same measurement quantity is reported differentially comprises: the measurement result of each path in the same measurement quantity in a same measurement report is reported differentially.

**7.** The method according to any one of claims 1 to 6, wherein the AI positioning function comprises one or more AI positioning models, and the measurement quantity corresponding to the channel measurement result corresponds to one or more AI positioning models.

**8.** A communication method, performed by a location management function network element or a chip or a circuit of the location management function network element, wherein the method comprises:

sending indication information to a first device, wherein the indication information indicates an artificial intelligence AI positioning function or an AI positioning model, the AI positioning function or the AI positioning model belongs to a plurality of AI positioning functions or AI positioning models, the plurality of AI positioning functions or AI positioning models correspond to a plurality of different measurement quantity sets, and the measurement quantity set comprises one or more measurement quantities; and
receiving a channel measurement result from the first device, wherein a measurement quantity corresponding to the channel measurement result corresponds to the AI positioning function or the AI positioning model indicated by the indication information.

**9.** The method according to claim 8, wherein the indication information is carried in a measurement request message from the location management function network element.

**10.** The method according to claim 8 or 9, wherein the AI positioning function or the AI positioning model corresponds to any one of the following measurement quantities:

a line of sight LOS identification result;
a time of arrival TOA estimation result;
an angle of arrival AOA estimation result;
an LOS identification result corresponding to each path in a first path set;
a delay corresponding to each path in a second path set;
an amplitude corresponding to each path in a third path set; or
a phase corresponding to each path in a fourth path set, wherein
at least two of the first path set, the second path set, the third path set, and the fourth path set are the same or different.

**11.** The method according to any one of claims 8 to 10, wherein

the first device is an access network device, the channel measurement result is obtained based on first channel measurement, and the first channel measurement comprises measuring a sounding reference signal from a terminal device; or

the first device is a terminal device, the channel measurement result is obtained based on second channel measurement, and the second channel measurement comprises measuring a positioning reference signal or a channel state information reference signal from an access network device; or

the first device is a first terminal device, the channel measurement result is obtained based on third channel measurement, and the third channel measurement comprises measuring a sidelink positioning reference signal from a second terminal device.

12. The method according to any one of claims 8 to 11, wherein the AI positioning function or the AI positioning model further corresponds to one of the following reporting methods:

a measurement result of each path in a same measurement quantity is reported independently; or
the measurement result of each path in the same measurement quantity is reported differentially.

13. The method according to claim 12, wherein the channel measurement result is comprised in a measurement report, and that the measurement result of each path in the same measurement quantity is reported differentially comprises: the measurement result of each path in the same measurement quantity in a same measurement report is reported differentially.

14. The method according to any one of claims 8 to 13, wherein the AI positioning function comprises one or more AI positioning models, and the measurement quantity corresponding to the channel measurement result corresponds to one or more AI positioning models.

15. A communication apparatus, comprising a module configured to perform the method according to any one of claims 1 to 7 or 8 to 14.

16. A communication system, comprising a module configured to perform the method according to any one of claims 1 to 7 and a module configured to perform the method according to any one of claims 8 to 14.

17. A communication apparatus, comprising:
a processor, configured to execute computer instructions stored in a memory, to enable the communication apparatus to perform the method according to any one of claims 1 to 7, or enable the communication apparatus to perform the method according to any one of claims 8 to 14.

18. A computer-readable storage medium, wherein the computer-readable storage medium stores a computer program, and when the computer program is run on a computer, the computer is enabled to perform the method according to any one of claims 1 to 7, or the computer is enabled to perform the method according to any one of claims 8 to 14.

19. A chip, comprising a processor, configured to run a computer program, to enable an apparatus in which the chip is installed to perform the method according to any one of claims 1 to 7, or enable an apparatus in which the chip is installed to perform the method according to any one of claims 8 to 14.

20. A computer program product, wherein the computer program product comprises a computer program run by a computer to perform the method according to any one of claims 1 to 7, or comprises a computer program run by a computer to perform the method according to any one of claims 8 to 14.

FIG. 1

FIG. 2

Access
network
element

UE

Positioning
device

FIG. 3

NRPPa

ng-eNB

LTE-Uu

gNB

NR-Uu

NR-C

AMF

NL1

LMF

RAN
(for example, an NG-RAN)

LPP

FIG. 4

FIG. 5

FIG. 6

FIG. 7

FIG. 8

900

| First device | | Location management function network element |

S910. Indication information

S920. Send a channel measurement result based on the indication information

FIG. 9

1000

| UE | | gNB | | LMF |

S1010. AI positioning measurement request #1

S1020. Configure the UE to send an SRS

S1030. SRS

S1040. Measure the SRS

S1050. Send a measurement result # 1 based on indication information

FIG. 10

1100

| UE | gNB | LMF |

S1110. AI positioning measurement
request #2

S1120. Configure the gNB to send
a PRS

S1130. PRS

S1140. Measure the PRS

S1150. Send a measurement result
# 2 based on indication information

FIG. 11

1200

| UE #1 | UE #2 | LMF |

S1210. AI positioning measurement
request #3

S1220. Configure the UE #2 to
send an SL-PRS

S1230. SL-PRS

S1240. Measure the SL-PRS

S1250. Send a measurement result
# 3 based on indication information

FIG. 12

1300

Transceiver unit 1310

Processing unit 1320

FIG. 13

1400

Processor 1410

Transceiver 1430

Memory 1420

FIG. 14

Chip system 1500

Logic circuit 1510

Input/Output interface 1520

FIG. 15

## INTERNATIONAL SEARCH REPORT

| International application No. |
|---|
| **PCT/CN2024/110875** |

### A. CLASSIFICATION OF SUBJECT MATTER

H04W24/10(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNKI, VCN, DWPI, ENTXT, 3GPP: 定位, 人工智能, 神经网络, 机器学习, 测量, 位置管理功能网元, 对应, 相应, 映射, 视距, 到达时间, 到达角, 径, 测量结果, 测量报告, 上报, 差分, 参考信号, position+, AI, measurement, LMF, associat +, LOS, TOA, AOA, report

### C. DOCUMENTS CONSIDERED TO BE RELEVANT

| Category* | Citation of document, with indication, where appropriate, of the relevant passages | Relevant to claim No. |
|---|---|---|
| X | WO 2023098662 A1 (VIVO COMMUNICATION TECHNOLOGY CO., LTD.) 08 June 2023 (2023-06-08) <br> description, page 7 paragraph 4-page 50 paragraph 2 | 1-20 |
| A | US 2022046385 A1 (QUALCOMM INC.) 10 February 2022 (2022-02-10) <br> entire document | 1-20 |
| A | US 2022046386 A1 (QUALCOMM INC.) 10 February 2022 (2022-02-10) <br> entire document | 1-20 |
| A | CN 115567866 A (HUAWEI TECHNOLOGIES CO., LTD.) 03 January 2023 (2023-01-03) <br> entire document | 1-20 |
| A | CN 116137742 A (HUAWEI TECHNOLOGIES CO., LTD.) 19 May 2023 (2023-05-19) <br> entire document | 1-20 |
| A | CN 116567806 A (VIVO COMMUNICATION TECHNOLOGY CO., LTD.) 08 August 2023 (2023-08-08) <br> entire document | 1-20 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **31 October 2024** | **06 November 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110875**

| Patent document cited in search report | | | Publication date (day/month/year) | Patent family member(s) | | | Publication date (day/month/year) |
|---|---|---|---|---|---|---|---|
| WO | 2023098662 | A1 | 08 June 2023 | EP | 4443993 | A1 | 09 October 2024 |
| | | | | US | 2024314728 | A1 | 19 September 2024 |
| | | | | CN | 116234001 | A | 06 June 2023 |
| US | 2022046385 | A1 | 10 February 2022 | WO | 2022031673 | A1 | 10 February 2022 |
| | | | | BR | 112023001361 | A2 | 14 February 2023 |
| | | | | US | 2024048945 | A1 | 08 February 2024 |
| | | | | EP | 4193165 | A1 | 14 June 2023 |
| | | | | KR | 20230044410 | A | 04 April 2023 |
| | | | | IN | 202247073041 | A | 06 January 2023 |
| | | | | CN | 116057402 | A | 02 May 2023 |
| | | | | VN | 94939 | A | 25 May 2023 |
| US | 2022046386 | A1 | 10 February 2022 | BR | 112023001262 | A2 | 14 February 2023 |
| | | | | JP | 2023537254 | A | 31 August 2023 |
| | | | | KR | 20230047368 | A | 07 April 2023 |
| | | | | EP | 4193171 | A1 | 14 June 2023 |
| | | | | WO | 2022031687 | A1 | 10 February 2022 |
| | | | | IN | 202247072693 | A | 06 January 2023 |
| | | | | CN | 116113841 | A | 12 May 2023 |
| | | | | VN | 94938 | A | 25 May 2023 |
| CN | 115567866 | A | 03 January 2023 | WO | 2023273860 | A1 | 05 January 2023 |
| | | | | EP | 4340402 | A1 | 20 March 2024 |
| | | | | US | 2024129894 | A1 | 18 April 2024 |
| CN | 116137742 | A | 19 May 2023 | WO | 2023088396 | A1 | 25 May 2023 |
| | | | | KR | 20240099494 | A | 28 June 2024 |
| CN | 116567806 | A | 08 August 2023 | WO | 2023143572 | A1 | 03 August 2023 |

Form PCT/ISA/210 (patent family annex) (July 2022)

## EP 4 750 136 A1

**Patent documents cited in the description**

- CN 202311014244